# EUROPEAN PATENT APPLICATION

(11) **EP 4 568 302 A1**
(43) Date of publication of application: **11.06.2025**
(21) Application number: 23856266.4
(22) Date of filing: 28.06.2023
(51) Int. Cl.: H04W 4/06

(54) **COMMUNICATION METHODS AND COMMUNICATION APPARATUSES**

(30) Priority: 26.08.2022 CN 202211034984
(71) Applicant: Huawei Technologies Co., Ltd., Shenzhen, Guangdong 518129 (CN)
(72) Inventor: XIE, Xi, Shenzhen, Guangdong 518129 (CN); LIU, Nannan, Shenzhen, Guangdong 518129 (CN); CHANG, Junren, Shenzhen, Guangdong 518129 (CN)
(74) Representative: Pfenning, Meinig & Partner mbB
(86) International application number: PCT/CN2023/103140
(87) International publication number: WO 2024/041175

(57) **Abstract**

This application provides a communication method and a communication apparatus, and relates to the communication field. In the method, a terminal device may request, from a network device by using first information, a first system information message required by the terminal device, to avoid signaling overheads caused by blind broadcasting of a system information message by the network device. When there are N types of system information messages, N bit information sets in the first information correspond to N types of system information. After receiving the first information, the network device may determine, based on a first bit information set to which first bit information belongs, that the terminal device requests the first system information message of a first type, and the network device may send the first system information message of the first type. In this way, a case in which the terminal device does not know how to request a system information message and the network device does not know a type of the system information message requested by the terminal device can be avoided, and a method for requesting a system information message is provided.

## Description

This application claims priority to Chinese Patent Application No. 202211034984.6, filed with the China National Intellectual Property Administration on August 26, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, one device may broadcast a system information message, and another device may receive the broadcast system information message. However, because there are a large quantity of system information messages, the another device may not need some system information messages, but the system information messages are still broadcast. Consequently, signaling is wasted.

### SUMMARY

Embodiments of this application provide a communication method and a communication apparatus, to reduce signaling.

According to a first aspect, a communication method and a communication apparatus are provided. The communication method is applicable to a terminal device, and the communication method includes: determining to request a first system information message; and sending first information, where first bit information in the first information is used to request the first system information message, N bit information sets in the first information correspond to N types of system information messages, the first bit information belongs to a first bit information set included in the N bit information sets, the first system information message belongs to a system information message of a first type corresponding to the first bit information set, the N types include the first type, and N is an integer greater than 1.

In the foregoing solution, the terminal device may request, from the network device by using the first information, the first system information message required by the terminal device, to avoid signaling overheads caused by blind broadcasting of a system information message by the network device. In addition, when there are N types of system information messages, the N bit information sets in the first information correspond to N types of system information. Because the first bit information for requesting the first system information message belongs to the first bit information set, it is equivalent that the terminal device requests the system information message of the first type corresponding to the first bit information set. Therefore, after receiving the first information, the network device may determine, based on the first bit information set to which the first bit information belongs, that the terminal device requests the first system information message of the first type, and the network device may send the first system information message of the first type. In this way, a case in which the terminal device does not know how to request a system information message and the network device does not know a type of the system information message requested by the terminal device can be avoided, and a method for requesting a system information message is provided. In addition, a case in which the terminal device needs to additionally indicate the type of the requested system information message is avoided, thereby reducing signaling overheads.

Optionally, the first system information message requested by the terminal device is a system information message in a non-broadcast status.

Optionally, before the sending first information, the method further includes: generating the first information.

Optionally, if a value of the first bit information in the first information is a first value, it indicates that the terminal device requests the system information message corresponding to the first bit information. If a value of bit information in the first information is a second value, it indicates that the terminal device does not request a system information message corresponding to the bit information. For example, the first value is 1, and the second value is 0. In other words, if the terminal device requests a system information message from the network device, a value corresponding to the system information message is set to the first value. If the terminal device does not request a system information message, a value corresponding to the system information message is set to the second value.

Optionally, the terminal device may request one or more system information messages of the first type. For example, if the terminal device needs to request a plurality of system information messages of the first type, bit information corresponding to the plurality of system information messages may be set to the first value. Optionally, the terminal device may request one or more system information messages of the first type and one or more system information messages of the second type. The terminal device may set, to the first value, bit information corresponding to the plurality of system information messages of the two types that need to be requested. In other words, the terminal device may request a plurality of types of system information messages in the first information.

In some possible implementations, the communication method further includes: receiving the first system information message.

According to a second aspect, a communication method and a communication apparatus are provided. The communication method is applicable to a network device, and the communication method includes: receiving first information, where first bit information in the first information is used to request a first system information message, N bit information sets in the first information correspond to N types of system information messages, the first bit information belongs to a first bit information set included in the N bit information sets, the first system information message belongs to a system information message of a first type corresponding to the first bit information set, the N types include the first type, and N is an integer greater than 1; and sending the first system information message.

In the foregoing solution, the network device may send the first system information message based on the first information from the terminal device, to avoid signaling overheads caused by blind broadcasting of a system information message by the network device. In addition, when there are N types of system information messages, the N bit information sets in the first information correspond to N types of system information. Because the first bit information for requesting the first system information message belongs to the first bit information set, it is equivalent that the terminal device requests the system information message of the first type corresponding to the first bit information set. Therefore, after receiving the first information, the network device may determine, based on the first bit information set to which the first bit information belongs, that the terminal device requests the first system information message of the first type, and the network device may broadcast the first system information message of the first type. In this way, a case in which the network device does not know the type of the system information message requested by the terminal device can be avoided, and a method for requesting a system information message is provided. In addition, a case in which the terminal device needs to additionally indicate the type of the requested system information message is avoided, thereby reducing signaling overheads.

The first aspect and the second aspect may further include the following implementations.

In some possible implementations, a first bit string in the first information includes the N bit information sets, and N locations of the N bit information sets in the first bit string correspond to the N types.

In the foregoing solution, one bit string in the first information may include the N bit information sets, and a location of each bit information set in the first bit string corresponds to a type corresponding to each bit information set. In this way, the network device may determine, based on a location of the first bit information set, that the first bit information set corresponds to the system information message of the first type, and then the network device broadcasts the first system information message in the system information message of the first type based on the first bit information.

In some possible implementations, the N bit information sets further include a second bit information set, the first bit information set is before the second bit information set in the N locations or the first bit information set is after the second bit information set in the N locations, the second bit information set corresponds to a system information message of a second type, and the N types include the second type. For example, the first type is R15 and/or R16, and the second type is R17.

In some possible implementations, a status of the system information message of the first type includes a broadcast status and a non-broadcast status, or a status of the system information message of the first type includes a non-broadcast status; and a status of the system information message of the second type includes a broadcast status and a non-broadcast status, or a status of the system information message of the second type includes a non-broadcast status.

In the foregoing solution, the terminal device may request a system information message whose system information message status is the non-broadcast status.

In some possible implementations, the first information includes a plurality of bit strings; and the first information includes a third bit information set, bit information included in the third bit information set belongs to at least two of the plurality of bit strings, the third bit information set corresponds to a system information message of a third type, and the N types include the third type; and/or the first information includes a fourth bit information set, bit information included in the fourth bit information set belongs to a second bit string in the plurality of bit strings, the fourth bit information set corresponds to a system information message of a fourth type, and the N types include the fourth type.

In the foregoing solution, when one bit string is insufficient to carry the N bit information sets, a plurality of bit strings may be used to carry the N bit information sets. Alternatively, the fourth bit information set corresponding to the system information message of the fourth type may belong to one bit string, and may not span a plurality of bit strings. In other words, some bit information sets in the N bit information sets may span a plurality of bit strings, and some bit information sets may belong to one bit string. After receiving the first information, the network device may concatenate bit information in the plurality of bit strings in the first information, to determine each bit information set.

In some possible implementations, the N bit information sets in the first information are in a one-to-one correspondence with the N types of system information messages, and the N types of system information messages are in a one-to-one correspondence with N system information message lists.

In the foregoing solution, if the terminal device requests the first system information message corresponding to the first bit information in the first bit information set, it is equivalent to requesting the first system information message in a system information message list corresponding to the system information message of the first type. In other words, the network device and the terminal device may maintain the system information message list, the terminal device requests a system information message in the system information message list, and the network device sends the system information message in the system information message list.

In some possible implementations, the N types further include the second type. The system information message of the first type is a system information message of a first feature, and the system information message of the second type is a system information message of a second feature. For example, the system information message of the first feature is a common system information message, and the system information message of the second feature is a dedicated system information message. For another example, the system information message of the first feature is a system information message for positioning, and the system information message of the second feature is a system information message for non-positioning. For another example, the system information message of the first feature is a system information message for low power consumption, and the system information message of the second feature is a system information message for positioning.

In some possible implementations, the N types further include the second type. The system information message of the first type is a system information message of a first release, and the system information message of the second type is a system information message of a second release. Optionally, the first release may be an earlier release, and the second release may be a later release; or the first release is a later release, and the second release is an earlier release. Optionally, the first release may be an old release, and the second release may be a new release; or the first release may be a new release, and the second release may be an old release. For example, the first release is R15 and/or R16, and the second release is R17; or the first release is R17, and the second release is R18. The N types of system information messages may further include more types of system information messages, for example, may further include a system information message of a third release. For example, the first release is R15 and/or R16, the second release is R17, and the third release is R18.

In some possible implementations, the N types further include the second type. The system information message of the first type is a system information message of a first release, and the system information message of the second type is a system information message of a third feature of a second release. In other words, an attribute of the first type may be different from an attribute of the second type, the first type may be of an attribute related to a release, and the second type may be of an attribute related to both a feature and a release. For example, the first type may be R15 and/or R16, and the second type may be R17 low power consumption.

In some possible implementations, the first release is the release 15 and/or the release 16, and the second release is the release 17.

In some possible implementations, the first information is carried in a radio resource control system information request message.

According to a third aspect, a communication method is provided. The communication method is applicable to a terminal device, and the communication method includes: receiving a first information list, where the first information list includes at least two pieces of configuration information, and the at least two pieces of configuration information corresponds to at least two types of system information messages; and requesting, based on first configuration information, a system information message of a first type corresponding to the first configuration information, where the at least two pieces of configuration information include the first configuration information, and the at least two types include the first type.

In the foregoing solution, the terminal device may obtain, based on a correspondence between the at least two pieces of configuration information and the at least two types of system information messages, the first configuration information corresponding to the system information message of the first type, and request the system information message of the first type based on the first configuration information. In this way, a method for requesting a system information message is provided.

According to a fourth aspect, a communication method is provided. The communication method is applicable to a network device, and the communication method includes: sending a first information list, where the first information list includes at least two pieces of configuration information, and the at least two pieces of configuration information corresponds to at least two types of system information messages; and when a terminal device requests a system information message from the network device based on first configuration information, sending a system information message of a first type corresponding to the first configuration information, where the at least two pieces of configuration information include the first configuration information, and the at least two types include the first type.

In the foregoing solution, the network device may send the first information list, and the at least two pieces of configuration information in the first information list correspond to the at least two types of system information messages. When the terminal device requests the system information message from the network device based on the first configuration information, the network device may send the system information message of the first type corresponding to the first configuration information. In this way, a method for requesting a system information message is provided.

Optionally, if the first configuration information corresponds to one system information message in the system information message of the first type, the network device sends the system information message; or if the first configuration information corresponds to a plurality of system information messages in the information message of the first type, the network device sends the plurality of system information messages.

The third aspect and the fourth aspect may further include the following implementations.

In some possible implementations, the at least two pieces of configuration information belong to at least two configuration information sets, and the at least two configuration information sets correspond to the at least two types of system information messages. In this case, the first information list includes the at least two configuration information sets.

In the foregoing solution, the terminal device may determine that a type of the system information message that needs to be requested is the first type, then determine a first configuration information set corresponding to the first type, and determine, in the first configuration information set, the first configuration information corresponding to a first system information message that needs to be requested, so as to request the first system information message of the first type based on the first configuration information. The network device determines, based on the first configuration information belonging to the first configuration information set, that the terminal device requests the system information message of the first type. The network device determines, based on the first configuration information, that the terminal device requests the first system information message in the system information message of the first type. The network device may send the first system information message.

Optionally, the at least two configuration information sets are in a one-to-one correspondence with the at least two types of system information messages. To be specific, the at least two pieces of configuration information may belong to N configuration information sets, and a quantity of types of system information messages is also N. In this case, the N configuration information sets are in a one-to-one correspondence with the N types of system information messages, that is, one configuration information set corresponds to one type of system information message. In other words, the terminal device may request, based on configuration information in a configuration information set, a system information message of a type corresponding to the configuration information set.

Optionally, a quantity of configuration information is N, a quantity of types of system information messages is also N, and the N pieces of configuration information are in a one-to-one correspondence with the N types of system information messages. In other words, configuration information used by the terminal device to request system information messages of a same type is the same. In this way, configurations can be simplified. Specifically, when requesting the system information message of the first type, the terminal device determines that the system information message of the first type corresponds to the first configuration information, the terminal device requests the system information message of the first type based on the first configuration information, the network device determines, based on the first configuration information, that the terminal device requests the system information message of the first type, and the network device sends the system information message of the first type.

In some possible implementations, the at least two types further include a second type. The system information message of the first type is a system information message of a first feature, and a system information message of the second type is a system information message of a second feature.

In some possible implementations, the at least two types further include a second type. The system information message of the first type is a system information message of a first release, and a system information message of the second type is a system information message of a second release.

In some possible implementations, the at least two types further include a second type. The system information message of the first type is a system information message of a first release, and a system information message of the second type is a system information message of a third feature of a second release.

In some possible implementations, the first release is a release 15 and/or a release 16, and the second release is a release 17.

For descriptions of the first type and the second type, refer to the descriptions of the first aspect and the second aspect.

In some possible implementations, in the first information list, configuration information corresponding to a system information message of the release 15 and/or a system information message of the release 16 is before configuration information corresponding to a system information message of the release 17.

In the foregoing solution, because the configuration information corresponding to the system information message of the earlier release 15 and/or the system information message of the earlier release 16 in the first information list is before the configuration information corresponding to the system information message of the later release 17, the network device may determine, based on a configuration information sequence, whether the terminal device requests a system information message of a later release or a system information message of an earlier release. For example, the first information list includes two pieces of configuration information. If the first configuration information is in the front of the first information list, the network device determines that the terminal device requests the system information message of the release 15 and/or the system information message of the release 16. If the first configuration information is at the end of the first information list, the network device determines that the terminal device requests the system information message of the release 17.

In some possible implementations, statuses of the at least two types of system information messages include a non-broadcast status. In other words, the network device may send the first information list for a system information message that is not broadcast.

According to a fifth aspect, a communication method is provided. The method is applicable to a terminal device, and includes: determining to request a first system information message; and sending first information, where the first information is used to request the first system information message and indicates a type of the first system information message, the type of the first system information message is one of N types, and N is an integer greater than 1.

In the foregoing solution, the terminal device may request, from the network device by using the first information, the first system information message required by the terminal device, to avoid signaling overheads caused by blind broadcasting of a system information message by the network device. In addition, when there are N types of system information messages, and the first information may indicate, to the network device, the type of the first system information message requested by the terminal device, after receiving the first information, the network device may determine, based on the first information, the type of the system information message requested by the terminal device and the specific requested system information message of the type, and the network device may send the first system information message requested by the terminal device. In this way, a case in which the terminal device does not know how to request a system information message and the network device does not know a type of the system information message requested by the terminal device can be avoided, and a method for requesting a system information message is provided.

According to a sixth aspect, a communication method is provided. The method is applicable to a network device, and includes: receiving first information, where the first information is used to request a first system information message and indicate a type of the first system information message, the type of the first system information message is one of N types, and N is an integer greater than 1; and sending the first system information message.

In the foregoing solution, the terminal device may request, from the network device by using the first information, the first system information message required by the terminal device, to avoid signaling overheads caused by blind broadcasting of a system information message by the network device. In addition, when there are N types of system information messages, and the first information may indicate, to the network device, the type of the first system information message requested by the terminal device, after receiving the first information, the network device may determine, based on the first information, the type of the system information message requested by the terminal device and the specific requested system information message of the type, and the network device may send the first system information message requested by the terminal device. In this way, a case in which the terminal device does not know how to request a system information message and the network device does not know a type of the system information message requested by the terminal device can be avoided, and a method for requesting a system information message is provided.

The fifth aspect and the sixth aspect may further include the following implementations.

In some possible implementations, first indication information in the first information indicates the type of the first system information message.

In the foregoing solution, the first indication information may directly indicate the type of the first system information message. For example, if a value of bit information of the first indication information is a third value, it indicates that the type of the first system information message is the first type. If a value of bit information of the first indication information is a fourth value, it indicates that the type of the first system information message is the second type. For example, the first indication information occupies 1 bit. If a value of the 1 bit is 1, it indicates that the terminal device requests the system information message of the first type, or if a value of the 1 bit is 0, it indicates that the terminal device requests the system information message of the second type. For example, the first type is R15 and/or R16, and the second type is R17. If the value of the 1 bit is 1, it indicates that the terminal device requests a system information message of R15 and/or a system information message of R16, or if the value of the 1 bit is 0, it indicates that the terminal device requests a system information message of R17.

Optionally, a location of the first indication information in the first information may be specified in a protocol, or may be pre-configured, or may be configured by the network device for the terminal device.

In some possible implementations, the first information includes second indication information, and the first information indicates that the type of the first system information message is the first type; or the first information does not include second indication information, the first information indicates that the type of the first system information message is the second type, and the N types include the first type and the second type.

Optionally, a location of the second indication information in the first information may be specified in a protocol, pre-configured, or configured by the network device.

In some possible implementations, the first information includes a first bit string, L pieces of bit information included in the first bit string correspond to L system information messages, types of the L system information messages are the same, the L system information messages include the first system information message, and L is a positive integer.

If a value of first bit information that is in the first bit string and that corresponds to the first system information message is a first value, it indicates that the terminal device requests the first system information message.

In some possible implementations, statuses of the L system information messages include a broadcast status and a non-broadcast status, or statuses of the L system information messages include a non-broadcast status.

In some possible implementations, the first information includes M bit strings, M is a positive integer greater than or equal to 2, Li pieces of bit information included in an i^{th} bit string in the M bit strings correspond to Li system information messages, a value of i is a positive integer from 1 to M, types of system information messages corresponding to bit information in each of the M bit strings are the same, and first bit information included in a bit string in the M bit strings corresponds to the first system information message. If a value of the first bit information is a first value, it indicates that the terminal device requests the first system information message.

In some possible implementations, statuses of the Li system information messages include a broadcast status and a non-broadcast status, or statuses of the Li system information messages include a non-broadcast status.

In some possible implementations, the first information is carried in a radio resource control RRC system information request message.

In some possible implementations, the N types are in a one-to-one correspondence with N system information message lists, and a system information message list in the N system information message lists includes at least one system information message.

In some possible implementations, the N types further include the second type. The system information message of the first type is a system information message of a first feature, and the system information message of the second type is a system information message of a second feature.

In some possible implementations, the N types further include the second type. The system information message of the first type is a system information message of a first release, and the system information message of the second type is a system information message of a second release.

In some possible implementations, the N types further include the second type. The system information message of the first type is a system information message of a first release, and the system information message of the second type is a system information message of a third feature of a second release.

In some possible implementations, the first release is the release 15 and/or the release 16, and the second release is the release 17.

For descriptions of the fifth aspect and the sixth aspect, refer to the descriptions of the first aspect and the second aspect. To avoid repetition, details are not described again.

According to a seventh aspect, this application provides a communication apparatus. The apparatus has a function of implementing behavior of each device according to the foregoing aspects and the possible implementations of the foregoing aspects. The function may be implemented by hardware, or may be implemented by hardware executing corresponding software. The hardware or the software includes one or more modules or units corresponding to the function, for example, a determining module or unit, or a transceiver module or unit.

According to an eighth aspect, this application provides a communication apparatus. The apparatus includes a processor, the processor is coupled to a memory, the memory is configured to store a computer program or instructions, and the processor is configured to execute the computer program or the instructions stored in the memory, so that the methods according to the foregoing aspects and the possible implementations of the foregoing aspects are performed.

For example, the processor is configured to execute the computer program or the instructions stored in the memory, so that the apparatus performs the method according to the foregoing aspects and the possible implementations of the foregoing aspects.

Optionally, the communication apparatus includes one or more processors.

Optionally, the communication apparatus may further include the memory coupled to the processor.

Optionally, the communication apparatus may include one or more memories.

Optionally, the memory and the processor may be integrated together or disposed separately.

Optionally, the communication apparatus may further include a transceiver.

According to a ninth aspect, this application provides a communication apparatus, including one or more processors, a memory, and one or more computer programs. The one or more computer programs are stored in the memory. The one or more computer programs include instructions. When the instructions are executed by the communication apparatus, the one or more processors are enabled to perform the method according to the foregoing aspects or any possible implementation of the foregoing aspects, or the method described in any embodiment of this application.

Optionally, the communication apparatus may further include a touch display and/or a camera, where the touch display includes a touch-sensitive surface and a display.

According to a tenth aspect, this application provides a computer-readable storage medium, including computer instructions. When the computer instructions are run on a communication apparatus, the communication apparatus is enabled to perform the method according to the foregoing aspects or any possible implementation of the foregoing aspects, or the method described in any embodiment of this application.

According to an eleventh aspect, this application provides a computer program product. When the computer program product runs on a communication apparatus, the communication apparatus is enabled to perform the method according to the foregoing aspects or any possible implementation of the foregoing aspects, or the method described in any embodiment of this application.

According to a twelfth aspect, this application provides a communication apparatus, including a unit configured to perform the method described in any embodiment of this application.

### BRIEF DESCRIPTION OF DRAWINGS

FIG. 1 is a diagram of an application scenario according to an embodiment of this application;
FIG. 2 is a diagram of a communication method according to an embodiment of this application;
FIG. 3 is a diagram of a relationship between a bit information set and a type of an SI message according to an embodiment of this application;
FIG. 4 is a diagram of a relationship between a location of a bit information set and a type of an SI message according to an embodiment of this application;
FIG. 5 is a diagram of a relationship between a bit information set and an SI message according to an embodiment of this application;
FIG. 6 is a diagram of another relationship between a bit information set and an SI message according to an embodiment of this application;
FIG. 7 is a diagram of another relationship between a bit information set and an SI message according to an embodiment of this application;
FIG. 8 is a diagram of another relationship between a bit information set and an SI message according to an embodiment of this application;
FIG. 9 is a diagram of a relationship between a bit information set and a plurality of bit strings according to an embodiment of this application;
FIG. 10 is a diagram of another relationship between a bit information set and a plurality of bit strings according to an embodiment of this application;
FIG. 11 is a diagram of a method for sending first information according to an embodiment of this application;
FIG. 12 is a diagram of another method for sending first information according to an embodiment of this application;
FIG. 13 is a diagram of another communication method according to an embodiment of this application;
FIG. 14 is a diagram of configuration information according to an embodiment of this application;
FIG. 15 is a diagram of another piece of configuration information according to an embodiment of this application;
FIG. 16 is a diagram of another communication method according to an embodiment of this application;
FIG. 17 is a diagram of a communication apparatus according to an embodiment of this application; and
FIG. 18 is a diagram of another communication apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, new radio (new radio, NR), or another future communication system.

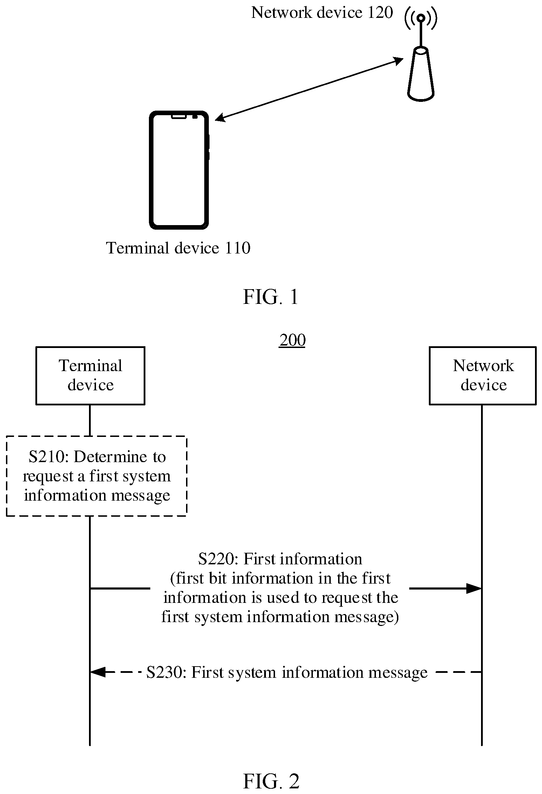

FIG. 1 is a diagram of an application scenario to which an embodiment of this application is applied. As shown in FIG. 1, a system includes a terminal device 110 and a network device 120.

The terminal device 110 is also referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user communication apparatus, or the like.

The terminal device 110 may be a device, for example, a handheld device or a vehicle-mounted device having a wireless connection function, that provides voice/data connectivity for a user. Currently, some examples of the terminal device include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, an uncrewed aerial vehicle, a terminal device in a 5G network, or a terminal device in a future evolved public land mobile communication network (public land mobile network, PLMN). This is not limited in this application.

The network device 120 may also be referred to as a radio access network (radio access network, RAN) or a radio access network device. The network device 120 may be a transmission reception point (transmission reception point, TRP), an evolved NodeB (evolved NodeB, eNB, or eNodeB) in an LTE system, a home NodeB (for example, a home evolved NodeB or a home NodeB, HNB), a baseband unit (baseband unit, BBU), or a radio controller in a cloud radio access network (cloud radio access network, CRAN) scenario. Alternatively, the network device 120 may be a relay station, an access point, a vehicle-mounted device, a wearable device, an uncrewed aerial vehicle, a satellite, a network device in a 5G network, a network device in a future evolved PLMN network, or the like; or may be an access point (access point, AP) in a wireless local area network (wireless local area network, WLAN) or a gNB in an NR system. Alternatively, the network device 120 may be a city base station, a micro base station, a pico base station, a femto base station, or the like. This is not limited in this application.

In a network structure, the network device 120 may include a central unit (central unit, CU) node, a distributed unit (distributed unit, DU) node, a radio access network (radio access network, RAN) device including a CU node and a DU node, or a device including a control plane CU node (CU-CP node), a user plane CU node (CU-UP node), and a DU node.

It should be understood that FIG. 1 shows the terminal device 110 and the network device 120 as examples merely for ease of understanding, but this should not constitute any limitation on this application. The wireless communication system may further include more network devices, or may include more or fewer terminal devices. This is not limited in this application. The terminal device 110 may be at a fixed location, or may be movable.

Optionally, the network device 120 in FIG. 1 may be replaced with a terminal device. A link for data transmission between terminal devices is referred to as a sidelink (sidelink). The sidelink is usually used in a scenario of direct communication, for example, vehicle-to-everything (vehicle-to-everything, V2X) communication, or device-to-device (device-to-device, D2D) communication in an indoor commercial scenario. For example, direct communication also needs to be performed between a plurality of terminal devices in the indoor commercial scenario. For example, a mobile phone needs to transmit a VR video to VR glasses, or the mobile phone needs to project a played image to a smart screen. In addition, V2X is a key technology for implementing an intelligent vehicle, self driving, and an intelligent transportation system. V2X may include vehicle-to-network (vehicle-to-network, V2N) communication, vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and the like.

For ease of description, a device number is omitted below. For example, the "terminal device 110" may be simplified as a "terminal device", and the "network device 120" may be simplified as a "network device".

Optionally, FIG. 1 may include more terminal devices. Optionally, when FIG. 1 includes more terminal devices, FIG. 1 may not include the network device. To be specific, communication between a plurality of terminal devices may not need assistance of the network device. Optionally, when FIG. 1 includes more terminal devices, FIG. 1 may include the network device. Communication between a plurality of terminal devices may need assistance of the network device.

The network device may broadcast system information (system information, SI) to the terminal device. The system information may include information used by the terminal device for initialization and/or other information. The system information includes a system information block. Because there are a large quantity of system information blocks, some terminal devices may not need some system information blocks, but the network device still broadcasts the system information blocks. This causes a waste of signaling.

The system information is classified into minimum system information (minimum SI) and other system information (other SI). The minimum system information includes a master information block (master information block, MIB) and a system information block 1 (system information block 1, SIB1). The SIBI1 is also referred to as remaining minimum system information (remaining minimum SI, RMSI). The other system information includes another system information block (system information block, SIB). The network device periodically broadcasts the MIB on a broadcast channel. A terminal device in an RRC idle mode or an RRC inactive mode may first receive the MIB periodically broadcast by the network device, and the MIB includes scheduling information. The network device periodically broadcasts the SIB1 on the broadcast channel. The terminal device obtains, based on the scheduling information included in the MIB, the SIBI1 broadcast by the network device and scheduling information included in the SIB1. The terminal device obtains, based on the scheduling information included in the SIB1, another SIB broadcast by the network device. Alternatively, the network device may send the SIB 1 to a terminal device in an RRC connected mode through radio resource control (radio resource control, RRC) dedicated signaling, and the terminal device obtains, based on scheduling information included in the SIB1, another SIB broadcast by the network device. For example, the another SIB includes a SIB2, SIB3, SIB4, SIB5, SIB6, SIB7, a SIB8, a SIB9, and the like. Because there are many other SIBs, a plurality of SIBs may be combined into one system information message (SI message) for sending. In this way, sending periods of SIBs in one system information message may be the same, and sending periods of different system information messages may be the same or different. For example, the SIB2 and the SIB5 form a system information message 1, and the SIB3, and the SIB4 and the SIB9 form a system information message 2. Some system information messages may be required by a plurality of terminal devices. Therefore, the network device needs to broadcast these system information messages. Some system information messages may be required only by a specific terminal device. Therefore, the network device may not broadcast these system information messages. The specific terminal device may initiate a request to request these system information messages only when the specific terminal device needs these system information messages, and the network device may send these system information messages.

Optionally, the scheduling information included in the SIBI1 may include scheduling information of one or more system information messages, where scheduling information of a system information message includes at least one of status information of the system information message, period information of the system information message, or mapping information of the system information message. The status information indicates a broadcast status of the system information message, and the broadcast status includes broadcast or non-broadcast. The period information of the system information message indicates a sending period of the system information message. The mapping information of the system information message indicates SIBs included in the system information message, that is, which SIBs are included in the system information message.

Optionally, the scheduling information included in the SIBI1 may further include a random access configuration for requesting a system information message. The terminal device may request the system information message based on the random access configuration. The random access configuration may be a random access configuration for one or more system information messages. The random access configuration may include a random access resource for requesting the system information message and a preamble for requesting the system information message, and the random access resource includes a time-frequency resource and a request period of the system information message. The time-frequency resource indicates a resource for requesting the system information message, the request period is a period for requesting the system information, and the preamble is a preamble for requesting the system information. There may be one or M preambles, and M is a positive integer. If there is one preamble, the terminal device uses the preamble regardless of which system information message is requested. After receiving the preamble, the network device may send all non-broadcast system information. In other words, the preamble does not reflect which system information message is specifically required by the terminal device, and the network device may broadcast all system information messages whose broadcast statuses are non-broadcast. If there are M preambles, and M is a quantity of system information messages whose broadcast statuses are non-broadcast, one preamble corresponds to one non-broadcast system information message. When requesting a system information message, the terminal device sends a preamble corresponding to the system information message. After receiving the preamble, the network device may broadcast the system information message corresponding to the preamble. In this way, the system information message broadcast by the network device is the system information message requested by the terminal device.

Optionally, the scheduling information included in the SIBI1 may further include length information of a scheduling window of the system information message. The network device periodically sends the system information message in the scheduling window, and the terminal device periodically receives the system information message in the scheduling window. The length information of the scheduling window is scheduling windows of one or more system information messages.

With development of communication technologies, there are more types of system information messages. If the network device can broadcast a plurality of types of system information messages, the terminal device can receive the plurality of types of system information messages. For example, the network device may broadcast a system information message of a release (Release, R) 15, or broadcast a system information message of a release (Release, R) 16, or broadcast a system information message of a release (Release, R) 17. When there are a plurality of types of system information messages, how the terminal device requests a system information message is also an urgent technical problem to be resolved.

The following describes a communication method in embodiments of this application with reference to FIG. 2. As shown in FIG. 2, a communication method 200 includes the following steps.

S210: A terminal device determines to request a first system information message.

Optionally, the terminal device determines, based on a requirement of the terminal device, to request the first system information message. For example, some system information messages include configuration information of a specific function. If the terminal device needs the specific function, the terminal device requests a system information message including the configuration information of the function.

Optionally, before S210, the method 200 includes: The terminal device determines a system information message whose status is non-broadcast, and determines the first system information message from the system information message whose status is non-broadcast. In other words, the first system information message is a system information message that is not broadcast by a network device currently. To be specific, the terminal device determines which system information messages are system information messages that are not broadcast by the network device currently, and then determines, based on an implementation of the terminal device, to request which system information message or system information messages that are not broadcast by the network device currently. Optionally, the system information message whose status is non-broadcast may be specified in a protocol, pre-configured by the network device, or configured by the network device for the terminal device.

Optionally, that the terminal device determines a system information message whose status is non-broadcast includes: The terminal device determines, based on scheduling information of a system information message included in scheduling information of a SIB 1, the system information message whose status is non-broadcast. In other words, the scheduling information of the system information message in the SIB1 indicates which system information messages are in a broadcast status and which system information messages are in a non-broadcast status.

S220: The terminal device sends first information, and the network device receives the first information.

First bit information in the first information is used to request the first system information message, N bit information sets in the first information correspond to N types of system information messages, the first bit information belongs to a first bit information set included in the N bit information sets, the first system information message belongs to a system information message of a first type corresponding to the first bit information set, the N types include the first type, and N is an integer greater than 1.

Optionally, if a value of the first bit information in the first information is a first value, it indicates that the terminal device requests the system information message corresponding to the first bit information. If a value of bit information in the first information is a second value, it indicates that the terminal device does not request a system information message corresponding to the bit information. For example, the first value is 1, and the second value is 0. In other words, if the terminal device requests a system information message from the network device, a value of bit information corresponding to the system information message is set to the first value. If the terminal device does not request a system information message, a value of bit information corresponding to the system information message is set to the second value.

Optionally, the terminal device may request one or more system information messages of the first type. For example, if the terminal device needs to request a plurality of system information messages of the first type, bit information corresponding to the plurality of system information messages may be set to the first value. Optionally, the terminal device may request one or more system information messages of the first type and one or more system information messages of a second type. The terminal device may set, to the first value, bit information corresponding to the plurality of system information messages of the two types that need to be requested.

Optionally, the N bit information sets correspond to M system information message lists, the M system information message lists (SI message lists) correspond to the N types of SI messages, and M is a positive integer greater than or equal to N. One system information message list may include SI messages of a same type, and the SI messages of the same type may belong to one system information message list or a plurality of system information message lists. If SI messages of a same type may belong to one system information message list, M=N, that is, a quantity of types is the same as a quantity of system information message lists. If SI messages of a same type may belong to a plurality of system information message lists, M is greater than N, that is, there are a plurality of system information message lists corresponding to SI messages of one type. Optionally, when SI messages of a same type may belong to one system information message list, that is, M=N, the N bit information sets are in a one-to-one correspondence with the N system information message lists, and the N system information message lists are in a one-to-one correspondence with the N types. Optionally, the M system information message lists may be specified in a protocol, pre-configured, or configured by the network device for the terminal device.

Optionally, the N types of system information messages include the second type. In other words, the terminal device can request both the system information message of the first type and the system information message of the second type in the first information, and the terminal device may determine, based on the implementation of the terminal device, whether to request the system information message of the first type or the second type, or request the system information messages of the first type and the second type. The system information message of the first type and the system information message of the second type are discussed in the following three cases.

Case 1: The system information message of the first type is a system information message of a first feature, and the system information message of the second type is a system information message of a second feature. For example, the system information message of the first feature is a common system information message, and the system information message of the second feature is a dedicated system information message. For another example, the system information message of the first feature is a system information message for positioning, and the system information message of the second feature is a system information message for non-positioning. For another example, the system information message of the first feature is a system information message for low power consumption, and the system information message of the second feature is a system information message for positioning. The N types of system information messages may further include more types of system information messages, for example, may further include a system information message of a third feature. A type of the system information message is not limited in embodiments of this application.

Case 2: The system information message of the first type is a system information message of a first release, and the system information message of the second type is a system information message of a second release. The first release may include one or more releases, and the second release may also include one or more releases. Optionally, the first release may be an earlier release, and the second release may be a later release; or the first release is a later release, and the second release is an earlier release. Optionally, the first release may be an old release, and the second release may be a new release; or the first release may be a new release, and the second release may be an old release. For example, the first release is R15 and/or R16, and the second release is R17; or the first release is R17, and the second release is R18. The N types of system information messages may further include more types of system information messages, for example, may further include a system information message of a third release. For example, the first release is R15 and/or R16, the second release is R17, and the third release is R18. A type of the system information message is not limited in embodiments of this application.

Case 3: The system information message of the first type is a system information message of a first release, and the system information message of the second type is a system information message of a third feature of a second release. In other words, an attribute of the first type may be different from an attribute of the second type, the first type may be of an attribute related to a release, and the second type may be of an attribute related to both a feature and a release. For example, the first type may be R15 and/or R16, and the second type may be R17 low power consumption. Alternatively, in Case 3, the system information message of the first type may be a system information message of a third feature of the first release, and the system information message of the second type is a system information message of the second release.

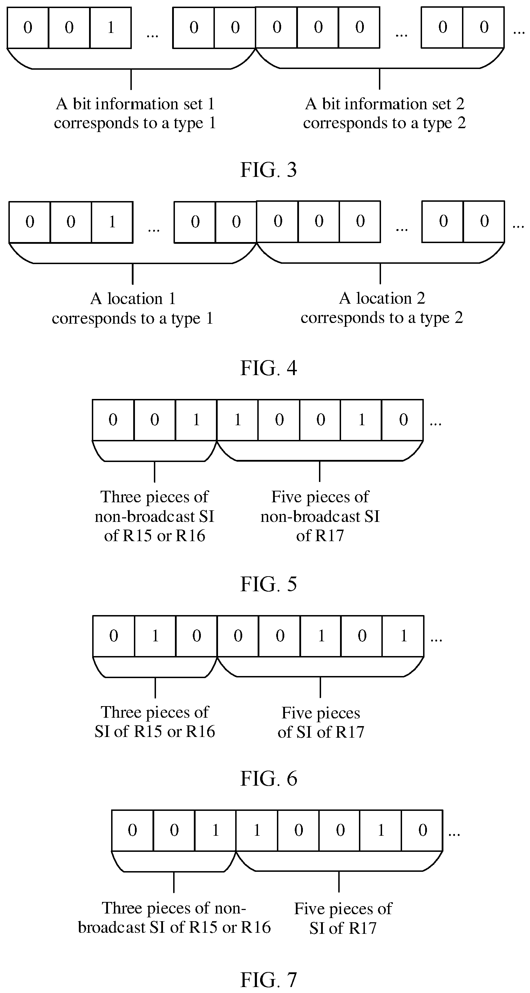

Optionally, the N bit information sets are in a one-to-one correspondence with the N types of system information messages. In this way, the network device may determine, by using the first bit information set to which the first bit information belongs, that the terminal device requests the system information message of the first type, and then determine, based on the first bit information, that the terminal device requests the first system information message in the system information message of the first type, so that the network device may send the first system information message. For example, as shown in FIG. 3, a bit information set 1 is {0 0 1... 0 0}, a bit information set 2 is {0 0 0... 0 0}, the bit information set 1 corresponds to a system information message of a type 1, the bit information set 2 corresponds to a system information message of a type 2, the first bit information is 1 in the bit information set 1, and 1 indicates that the terminal device requests the first system information message corresponding to a bit location of 1.

Optionally, the N bit information sets in the first information are in a one-to-one correspondence with N locations. In other words, the locations corresponding to the bit information sets are different. Optionally, one bit information set includes at least one bit location at which at least one piece of bit information is located, to form a location corresponding to the bit information set. Optionally, the network device determines, by using a first location of the first bit information set to which the first bit information belongs, that the terminal device requests a system information message of the first type corresponding to the first location, and then determines, based on the first bit information, that the terminal device requests the first system information message in the system information message of the first type, so that the network device may send the first system information message. Optionally, the network device determines, based on a ranking, in the N locations, of the first location of the first bit information set to which the first bit information belongs, that the terminal device requests the system information message of the first type, and then determines, based on the first bit information, that the terminal device requests the first system information message in the system information message of the first type. For example, as shown in FIG. 4, a bit information set 1 is {0 0 1... 0 0}, a bit information set 2 is {0 0 0... 0 0}, a location of the bit information set 1 in the first information is a location 1, a location of the bit information set 2 in the first information is a location 2, the location 1 corresponds to a system information message of a type 1, the location 2 corresponds to a system information message of a type 2, and the first bit information is 1 in the bit information set 1. Because the location of the bit information set 1 is the location 1, it indicates that the terminal device requests a system information message of the type 1 corresponding to the location 1. The first bit information set being 1 indicates that the terminal device requests the first system information message corresponding to a bit location of 1, and 0 in the bit information set 1 and the bit information set 2 indicates that the terminal device does not request system information messages corresponding to these bit locations.

Optionally, the first information may include a bit string, the bit string includes the N bit information sets, and the first information may include one or more bit strings. When the first information includes one bit string, the bit string includes the N bit information sets. When the first information includes a plurality of bit strings, the plurality of bit strings include the N bit information sets. The following describes the bit string included in the first case in two cases.

Case 1: The first information includes a first bit string, and the first bit string includes the N bit information sets.

Optionally, the first bit string in the first information includes the N bit information sets, and N locations of the N bit information sets in the first bit string correspond to the N types. Optionally, the N locations are in a one-to-one correspondence with the N types. A ranking of a location of each bit information set in the N locations indicates a type corresponding to each bit information set. For example, the first bit string may include the bit information set 1 at the location 1 and the bit information set 2 at the location 2 shown in FIG. 4.

Optionally, the correspondence between the N locations and the N types may be specified in a protocol, pre-configured, or configured by the network device. This is not limited in embodiments of this application.

Optionally, the N bit information sets further include a second bit information set, the first bit information set is before the second bit information set in the N locations or the first bit information set is after the second bit information set in the N locations, the second bit information set corresponds to the system information message of the second type, and the N types include the second type. For example, as shown in FIG. 4, the location 1 is a location of the first bit information set, and the location 2 is a location of the second bit information set. In this case, the location 1 is before the location 2 in the first bit string. Alternatively, as shown in FIG. 4, the location 1 is a location of the second bit information set, the location 2 is a location of the first bit information set, and the location 2 is after the location 1 in the first bit string.

The network device broadcasts some system information messages, and does not broadcast remaining system information messages. Which system information messages are broadcast and which system information messages may not be broadcast may be specified in a protocol or configured by the network device. The following describes four system information message statuses in Case 1.
(a) A status of the system information message of the first type includes a non-broadcast status, and a status of the system information message of the second type includes a non-broadcast status. In other words, all system information messages of the first type corresponding to the first bit information set are system information messages that are not broadcast by the network device, and all system information messages of the second type corresponding to the second bit information set are system information messages that are not broadcast by the network device. In other words, a system information message corresponding to each of the N bit information sets is a system information message that is not broadcast by the network device. For example, the first type is R15 and/or R16, the second type is R17, and the first bit string is shown in FIG. 5. The first bit information set included in the first bit string is {0 0 1}, and the second bit information set is {1 0 0 1 0}. {0 0 1} in the first bit information set corresponds to three non-broadcast system information messages of R15 and/or R16, {1 0 0 1 0} in the second bit information set corresponds to five non-broadcast system information messages of R17, 1 indicates that a system information message is requested, and 0 indicates that a system information message is not requested. The first bit string indicates that a 3^{rd} system information message in the non-broadcast system information messages of R15 and/or R16 and a 1^{st} system information message and a 4^{th} system information message in the non-broadcast system information messages of R17 are requested. In other words, the network device and the terminal device have a consistent understanding of the first information. When the terminal device needs to request a system information message of R15 and/or a system information message of R16, the terminal device determines that first three pieces of bit information in the first bit string are bit information corresponding to R15 and/or R16. When the network device learns, through parsing, that a 3^{rd} piece of bit information in the first three pieces of bit information in the first bit string is 1, it indicates that the terminal device requests the 3^{rd} non-broadcast system information message of R15 and/or R16. For example, the network device determines that the terminal device requests a 3^{rd} non-broadcast system information message in a system information message list of R15 and/or R16 (in this case, the system message list of R15 and/or R16 includes a broadcast system information message and a non-broadcast system information message, or includes a non-broadcast system information message). When the terminal device needs to request a system information message of R17, the terminal device determines that a 4^{th} piece of bit information to an 8^{th} piece of bit information in the first bit string are bit information corresponding to R17. When the network device learns, through parsing, that the 4^{th} piece of bit information and the 7^{th} piece of bit information are 1, it indicates that the terminal device requests the 1^{st} non-broadcast system information message and the 4^{th} non-broadcast system information message of R17. For example, the network device determines that the terminal device requests a 1^{st} non-broadcast system information message and a 4^{th} non-broadcast system information message in a system information message list of R17 (in this case, the system message list of R17 includes a broadcast system information message and a non-broadcast system information message, or includes a non-broadcast system information message).
(b) A status of the system information message of the first type includes a broadcast status and a non-broadcast status, and a status of the system information message of the second type includes a broadcast status and a non-broadcast status. In other words, the system information message of the first type corresponding to the first bit information set includes system information messages that are broadcast and not broadcast by the network device, and the system information message of the second type corresponding to the second bit information set includes system information messages that are broadcast and not broadcast by the network device. In other words, a system information message corresponding to each of the N bit information sets includes system information messages that are broadcast and not broadcast by the network device. For example, the first type is R15 and/or R16, the second type is R17, and the first bit string is shown in FIG. 6. {0 1 0} in the first bit information set included in the first bit string corresponds to three system information messages of R15 and/or R16, {0 0 1 0 1} in the second bit information set corresponds to five system information messages of R17, 1 indicates that a system information message is requested, and 0 indicates that a system information message is not requested. The first bit string indicates that a 3^{rd} system information message in the system information messages of R15 and/or R16 and a 1^{st} system information message and a 4^{th} system information message in the system information of R17 are requested. For example, a 3^{rd} system information message in a system information message list of R15 and/or R16 (in this case, the system message list of R15 and/or R16 includes a broadcast system information message and a non-broadcast system information message) and a 1^{st} system information message and a 4^{th} system information message in a system information message list of R17 (in this case, the system message list of R17 includes a broadcast system information message and a non-broadcast system information message) are requested. In other words, the network device and the terminal device have a consistent understanding of the first information. When the terminal device needs to request a system information message of R15 and/or a system information message of R16, the terminal device determines that first three pieces of bit information in the first bit string are bit information corresponding to R15 and/or R16. When the network device learns, through parsing, that a 2^{nd} piece of bit information in the first three pieces of bit information in the first bit string is 1, it indicates that the terminal device requests a 2^{nd} system information message of R15 and/or R16. When the terminal device needs to request a system information message of R17, the terminal device determines that a 4^{th} piece of bit information to an 8^{th} piece of bit information in the first bit string are bit information corresponding to R17. When the network device learns, through parsing, that the 6^{th} piece of bit information and the 8^{th} piece of bit information are 1, it indicates that the terminal device requests a 3^{rd} system information message and a 5^{th} system information message of R17.

That is, in (b), the system information message of the first type belongs to a system information message list of the first type, and in the system information messages of the first type, which system information messages are in a broadcast status and which system information messages are in a non-broadcast status are not distinguished. A quantity of bit information corresponding to the first bit information set corresponding to the system information message of the first type in the first information is the same as a quantity of system information messages included in the system information message list of the first type. The system information message of the second type belongs to a system information message list of the second type, and in the system information messages of the second type, which system information messages are in a broadcast status and which system information messages are in a non-broadcast status are not distinguished. A quantity of bit information corresponding to the second bit information set corresponding to the system information message of the second type in the first information is the same as a quantity of system information messages included in the system information message list of the second type.

(c) A status of the system information message of the first type includes a non-broadcast status, and a status of the system information message of the second type includes a broadcast status and a non-broadcast status. In other words, the system information message of the first type corresponding to the first bit information set includes a system information message that is not broadcast by the network device, and the system information message of the second type corresponding to the second bit information set includes system information messages that are broadcast and not broadcast by the network device. In other words, system information messages corresponding to some bit information sets in the N bit information sets are system information messages that are broadcast and not broadcast by the network device, and system information messages corresponding to some bit information are system information messages that are not broadcast by the network device. For example, the first type is R15 and/or R16, the second type is R17, and the first bit string is shown in FIG. 7. {0 0 1} in the first bit information set included in the first bit string corresponds to three non-broadcast system information messages of R15 and/or R16, {1 0 0 1 0} in the second bit information set corresponds to five broadcast and non-broadcast system information messages of R17, 1 indicates that a system information message is requested, and 0 indicates that a system information message is not requested. The first bit string indicates that a 3^{rd} non-broadcast system information message in the system information messages of R15 and/or R16 and a 1^{st} system information message and a 4^{th} system information message in the system information of R17 are requested. For example, a 3^{rd} non-broadcast system information message in a system information message list of R15 and/or R16 (in this case, the system message list of R15 and/or R16 includes a broadcast system information message and a non-broadcast system information message, or includes a non-broadcast system information message) and 1^{st} and 4^{th} system information messages in a system information list of R17 (in this case, the system message list of R17 includes a broadcast system information message and a non-broadcast system information message) are requested. In other words, the network device and the terminal device have a consistent understanding of the first information. When the terminal device needs to request a system information message of R15 and/or a system information message of R16, the terminal device determines that first three pieces of bit information in the first bit string are bit information corresponding to R15 and/or R16. When the network device learns, through parsing, that a 3^{rd} piece of bit information in the first three pieces of bit information in the first bit string is 1, it indicates that the terminal device requests a 3^{rd} non-broadcast system information message of R15 and/or R16. When the terminal device needs to request a system information message of R17, the terminal device determines that a 4^{th} piece of bit information to an 8^{th} piece of bit information in the first bit string are bit information corresponding to R17. When the network device learns, through parsing, that the 4^{th} piece of bit information and the 7^{th} piece of bit information are 1, it indicates that the terminal device requests a 1^{st} system information message and a 4^{th} system information message of R17.

That is, in (c), the system information message of the second type belongs to a system information message list of the second type, and in the system information messages of the second type, which system information messages are in a broadcast status and which system information messages are in a non-broadcast status are not distinguished. A quantity of bit information corresponding to the second bit information set corresponding to the system information message of the second type in the first information is the same as a quantity of system information messages included in the system information message list of the second type.

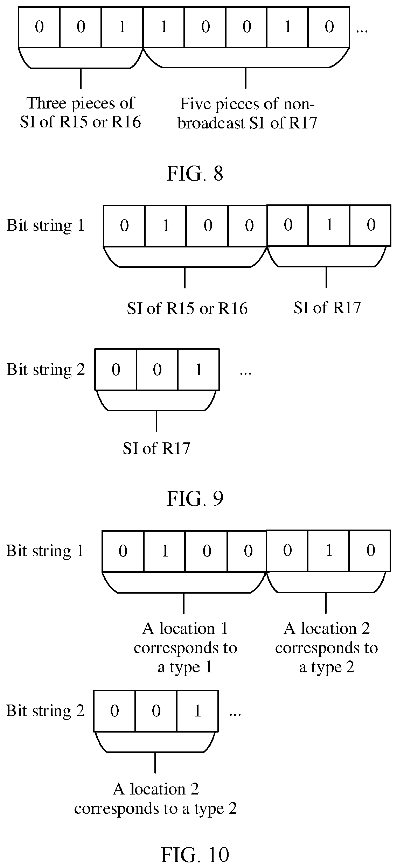

(d) A status of the system information message of the first type includes a broadcast status and a non-broadcast status, and a status of the system information message of the second type includes a non-broadcast status. In other words, the system information message of the first type corresponding to the first bit information set includes system information messages that are broadcast and not broadcast by the network device, and the system information message of the second type corresponding to the second bit information set includes a system information message that is not broadcast by the network device. In other words, system information messages corresponding to some bit information sets in the N bit information sets are system information messages that are broadcast and not broadcast by the network device, and system information messages corresponding to some bit information are system information messages that are not broadcast by the network device. For example, the first type is R15 and/or R16, the second type is R17, and the first bit string is shown in FIG. 8. {0 0 1} in the first bit information set included in the first bit string corresponds to three broadcast and non-broadcast system information messages of R15 and/or R16, {1 0 0 1 0} in the second bit information set corresponds to five non-broadcast system information messages of R17, 1 indicates that a system information message is requested, and 0 indicates that a system information message is not requested. The first bit string indicates that a 3^{rd} system information message in the system information messages of R15 and/or R16 and a 1^{st} non-broadcast system information message and a 4^{th} non-broadcast system information message in the system information of R17 are requested. For example, a 3^{rd} system information message in a system information message list of R15 and/or R16 (in this case, the system message list of R15 and/or R16 includes a broadcast system information message and a non-broadcast system information message) and a 1^{st} non-broadcast system information message and a 4^{th} non-broadcast system information message in a system information list of R17 (in this case, the system message list of R17 includes a broadcast system information message and a non-broadcast system information message, or includes a non-broadcast system information message) are requested. In other words, the network device and the terminal device have a consistent understanding of the first information. When the terminal device needs to request a system information message of R15 and/or a system information message of R16, the terminal device determines that first three pieces of bit information in the first bit string are bit information corresponding to R15 and/or R16. When the network device learns, through parsing, that a 3^{rd} piece of bit information in the first three pieces of bit information in the first bit string is 1, it indicates that the terminal device requests a 3^{rd} system information message of R15 and/or R16. When the terminal device needs to request a system information message of R17, the terminal device determines that a 4^{th} piece of bit information to an 8^{th} piece of bit information in the first bit string are bit information corresponding to R17. When the network device learns, through parsing, that the 4^{th} piece of bit information and the 7^{th} piece of bit information are 1, it indicates that the terminal device requests 1^{st} and 4^{th} non-broadcast system information messages of R17.

That is, in (d), the system information message of the first type belongs to a system information message list of the first type, and in the system information messages of the first type, which system information messages are in a broadcast status and which system information messages are in a non-broadcast status are not distinguished. A quantity of bit information corresponding to the first bit information set corresponding to the system information message of the first type in the first information is the same as a quantity of system information messages included in the system information message list of the first type.

It should be noted that, in Case 1, the terminal device and the network device have a consistent understanding of the first bit string in the first information. The terminal device can learn that an information bit in which the first bit string is located in the first information carries the N bit information sets, and the network device can also learn that the information bit in which the first bit string is located in the first information carries the N bit information sets. In addition, the terminal device and the network device have a consistent understanding of the N locations that correspond to the N bit information sets and that are in the first bit string. The terminal device can learn of a specific type of system information message carried at a specific location in the N locations, and the network device can also learn of the specific type of system information message carried at the specific location in the N locations. Therefore, the terminal device can request a system information message of a corresponding type, and the network device can also learn of the type of the system information message requested by the terminal device.

Optionally, the first bit string may further include other bit information in addition to the N bit information sets, and the other bit information may be set to 0. In other words, a length of the first bit string may be fixed. If bit information included in the N bit information sets exactly meets the length of the first bit string, 0 is not padded. If the length of the first bit string is greater than a length of bit information included in the N bit information sets, remaining bits in the first bit string are 0s. For example, the length of the first bit string is X, and a quantity of bit information included in the N bit information sets is Y If X is greater than Y, 0s are padded to X-Y pieces of bit information.

Optionally, the length of the first bit string may be specified in a protocol, or may be pre-configured, or may be configured by the network device for the terminal device.

Case 2: The first information includes a plurality of bit strings, and the plurality of bit strings include the N bit information sets. In other words, the N bit information sets span the plurality of bit strings. In other words, when one bit string is insufficient to carry the N bit information sets, the N bit information sets may be carried by using the plurality of bit strings. Optionally, lengths of all bit strings in the plurality of bit strings are the same, or lengths of some bit strings in the plurality of bit strings are the same, or lengths of some bit strings are different.

Optionally, a ranking of any one of the N bit information sets in a plurality of bit strings indicates a type of a system information message corresponding to the any one bit information set. For example, as shown in FIG. 9, a ranking of a bit information set {0 1 0 0} in two bit strings is the first, and the 1^{st} bit information set in the plurality of bit strings corresponds to the system information message of R15 and/or the system information message of R16. Therefore, the network device may determine that the terminal device requests the system information message of R15 and/or the system information message of R16. Then, the network device determines, based on 1, that the terminal device requests a 2^{nd} system information message of R15 and/or R16, and the network device may broadcast the 2^{nd} system information message of R15 and/or R16. A ranking of a bit information set {0 1 0 0 0 1} in the two bit strings is the second, and the 2^{nd} bit information set in the plurality of bit strings corresponds to the system information message of R17. Therefore, the network device may determine that the terminal device requests the system information message of R17. The network device determines, based on 1, that the terminal device requests a 2^{nd} system information message and a 6^{th} system information message of R17, and the network device may broadcast the 2^{nd} system information message and the 6^{th} system information message of R17.

Optionally, N locations of the N bit information sets in the plurality of bit strings are in a one-to-one correspondence with the N types. A ranking of a location of each bit information set in the N locations indicates a type corresponding to each bit information set, and some locations of some types may span a plurality of bit strings. For example, as shown in FIG. 10, a location 1 in a bit string 1 corresponds to a type 1, and a location 2 that spans the bit string 1 and a bit string 2 corresponds to a type 2. In this way, the network device determines the type 1 at the location 1 and the type 2 at the location 2, to determine the type of the system information message requested by the terminal device.

Optionally, the correspondence between the N locations and the N types may be specified in a protocol, pre-configured, or configured by the network device. This is not limited in embodiments of this application.

Optionally, the first information includes a third bit information set, bit information included in the third bit information set belongs to at least two bit strings in the plurality of bit strings, the third bit information set corresponds to a system information message of a third type, and the N types include the first type and the third type. In this way, after receiving the first information, the network device may concatenate bit information in the plurality of bit strings in the first information, to determine the third bit information set. For example, as shown in FIG. 9, the first information includes a bit string 1 and a bit string 2, the first type is R15 or R16, the third type is R17, the bit string 1 includes the bit information set {0 1 0 0} of R15 and/or R16 and some bit information {0 1 0} of the bit information set {0 1 0 0 0 1} of R17, and the bit string 2 includes remaining bit information {0 0 1} in the bit information set {0 1 0 0 0 1} of R17. The network device determines, based on {0 1 0 0} in the bit string 1, that the terminal device requests the 2^{nd} system information message of R15 and/or R16. The network device concatenates the bit information {0 1 0} in the bit string 1 and the remaining bit information {0 0 1} in the bit string 2 to obtain {0 1 0 0 0 1}, to determine that the terminal device requests the 2^{nd} system information message and the 6^{th} system information message of R17.

Optionally, the first information includes a fourth bit information set, bit information included in the fourth bit information set belongs to a second bit string in the plurality of bit strings, the fourth bit information set corresponds to a system information message of a fourth type, and the N types include the fourth type. In other words, the fourth bit information set corresponding to the system information message of the fourth type belongs to one bit string, and may not span a plurality of bit strings. For example, the second bit string is the bit string 1 in FIG. 9, the fourth type is R15 or R16, and the fourth bit information set {0 1 0 0} belongs to the bit string 1.

In other words, in Case 2, some bit information sets belong to one bit string, and some bit information sets belong to at least two bit strings, for example, may belong to two bit strings or three bit strings.

It should be noted that the N bit information sets may include the third bit information set, or may include the fourth bit information set, or may include both the third bit information set and the fourth bit information set. In other words, a bit information set in the N bit information sets may span a plurality of bit strings, or one bit string includes one bit information set that does not span the bit string, or some bit information sets in the N bit information sets may span a plurality of bit strings and some bit information set may belong to one bit string.

Optionally, when the N bit information sets include the third bit information set, the third bit information set corresponds to the system information message of the third type, and a status of the system information message of the third type includes a non-broadcast status, or a broadcast status and a non-broadcast status of the system information message of the third type are not distinguished. When the N bit information sets include the fourth bit information set, the fourth bit information set corresponds to the system information message of the fourth type, and a status of the system information message of the fourth type includes a non-broadcast status, or a broadcast status and a non-broadcast status of the system information message of the fourth type are not distinguished. When the N bit information sets include the third bit information set and the fourth bit information set, the third bit information set corresponds to the system information message of the third type, and the fourth bit information set corresponds to the system information message of the fourth type. Statuses of the system information message of the third type and the system information message of the fourth type include a non-broadcast status. For example, in FIG. 9, statuses of the system information messages of R15 and/or R16 are non-broadcast, and statuses of the system information messages of R17 are non-broadcast. Alternatively, statuses of the system information message of the third type and the system information message of the fourth type include a broadcast status and a non-broadcast status. For example, in FIG. 9, statuses of the system information messages of R15 and/or R16 are broadcast and non-broadcast, and statuses of the system information messages of R17 are broadcast and non-broadcast. Alternatively, a status of the system information message of the third type includes a non-broadcast status, and a status of the system information message of the fourth type includes a broadcast status. For example, in FIG. 9, statuses of the system information messages of R15 and/or R16 are non-broadcast, and statuses of the system information messages of R17 are broadcast. Alternatively, a status of the system information message of the third type includes a broadcast status, and a status of the system information message of the fourth type includes a non-broadcast status. For example, in FIG. 9, statuses of the system information messages of R15 and/or R16 are broadcast, and statuses of the system information messages of R17 are non-broadcast.

Optionally, the plurality of bit strings may further include other bit information in addition to the N bit information sets, and the other bit information may be set to 0. In other words, a sum of lengths of the plurality of bit strings may be fixed. If bit information included in the N bit information sets exactly meets the sum of the lengths of the plurality of bit strings, 0 is not padded. If the sum of the lengths of the plurality of bit strings is greater than bit information included in the N bit information sets, remaining bits in the plurality of bit strings are 0s. For example, the sum of the lengths of the plurality of bit strings is X, and a quantity of bit information included in the N bit information sets is Y If X is greater than Y, 0s are padded to the X-Y pieces of bit information.

Optionally, a length of each of the plurality of bit strings may be specified in a protocol, pre-configured, or configured by the network device for the terminal device. If bit information in a bit information set does not occupy a bit string, 0 is padded to the bit string.

It should be noted that, in Case 2, the terminal device and the network device have a consistent understanding of the plurality of bit strings in the first information. The terminal device can learn that information bits in which the plurality of bit strings are located in the first information carries the N bit information sets, and the network device can also learn that the information bits in which the plurality of bit strings are located in the first information carries the N bit information sets. In addition, the terminal device and the network device have a consistent understanding of the N locations that correspond to the N bit information sets and that are in the plurality of bit strings. The terminal device can learn of a specific type of system information message carried at a specific location in the N locations, and the network device can also learn of the specific type of system information message carried at the specific location in the N locations. Therefore, the terminal device can request a system information message of a corresponding type, and the network device can also learn of the type of the system information message requested by the terminal device. For a system information message of a specific type that spans a plurality of bit strings, the network device needs to concatenate bit information in the plurality of bit strings to obtain a complete bit information set, so as to determine a type corresponding to the bit information set.

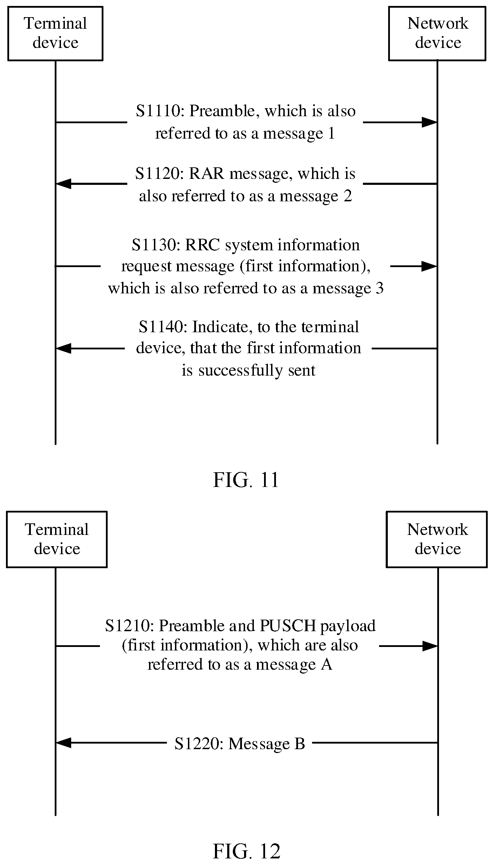

Optionally, S220 includes: The terminal device may send the first information based on a message similar to a message 3 or a message A in a random access process. Optionally, the terminal device may send the first information based on a message similar to a message 3 in four-step random access, or send the first information based on a message similar to a message A in two-step random access. FIG. 11 shows that the first information is sent based on the message similar to the message 3 in the four-step random access. As shown in FIG. 11, the following describes a process of sending the first information based on the message similar to the message 3 in the four-step random access.

S1110: The terminal device sends a preamble (preamble), which is also referred to as a message 1, and the network device receives the message 1.

S1110 may be that the terminal device sends the preamble on a random access channel occasion (RACH occasion, RO).

The preamble in S1110 is a preamble used for random access.

S1120: In response to S1110, the network device sends a random access response (random access response, RAR) message to the terminal device, and the terminal device receives the RAR message, which is also referred to as a message 2.

An RAR may include a preamble identifier, timing advance (timing advance, TA) information, an uplink grant (UL grant), a cell radio network temporary identifier (cell radio network temporary identifier, C-RNTI), and the like. TA is used for uplink synchronization.

If a preamble identified by the preamble identifier included in the RAR is consistent with an identifier of the preamble sent by the terminal device in the message 1, the response succeeds. Then, the terminal device may send the message 3 through the uplink grant in the RAR, and perform S1130.

If the terminal device does not receive the RAR in a random access response window, or the preamble identified by the preamble identifier included in the RAR received by the terminal device is inconsistent with the preamble sent by the terminal device, the response fails. In this case, the terminal device may subsequently perform S1110 again.

S1130: The terminal device sends a radio resource control (radio resource control, RRC) system information request message to the network device on an uplink grant of the message 3, where the RRC system information request message is also referred to as the message 3 and includes the first information in S220.

If the network device successfully receives the message 3, S1140 is performed.

S1140: In response to S1130, the network device indicates, to the terminal device, that the terminal device successfully sends the first information. The network device may perform S230.

In other words, if the terminal device sends the first information in the four-step random access procedure, there is no limitation on a sequence of performing S210 by the terminal device and performing either of S1110 or S1120, and S1130 is equivalent to S220. After S1140, the network device sends the first system information message, and the terminal device receives the first system information message.

With reference to FIG. 12, the following describes sending the first information based on a principle of the two-step random access.

S1210: The terminal device sends a preamble (preamble) and a physical uplink shared channel (physical uplink shared channel, PUSCH) payload, which are also referred to as a message A, and the network device receives the message A. The PUSCH payload includes the first information.

The preamble in S1210 is a preamble used for random access.

S1220: The network device sends a message B to the terminal device.

If the network device successfully receives the preamble and the first information that are included in the message A, the message B is a success RAR (success RAR), the success RAR response may include a contention resolution identifier, TA information, and a C-RNTI.

If the network device successfully receives and decodes the preamble sent by the terminal device, but fails to receive and decode the first information sent by the terminal device, the message B includes a fallback RAR (fallback RAR), and may include a preamble identifier, TA information, an uplink grant (UL grant), a C-RNTI, and the like. If a preamble identified by the preamble identifier included in the fallback RAR is consistent with the preamble in the message A, the terminal device sends the message 3 through the uplink grant in the fallback RAR, where the message 3 includes the first information, and the message 3 is consistent with the message 3 in S1130. Then, the network device sends a message 4. In other words, the two-step random access falls back to the four-step random access.

In other words, if the terminal device sends the first information in the two-step random access procedure, S1210 is equivalent to S220. After S1220, the network device sends the first system information message, and the terminal device receives the first system information message.

If the terminal device is in an RRC idle mode or an RRC inactive mode, the terminal device may send the first information through the two-step random access in FIG. 12 or the four-step random access in FIG. 11. If the terminal device is in an RRC connected mode, the terminal device may send the first information through RRC dedicated signaling.

S230: The network device sends the first system information message, and the terminal device receives the first system information message.

Optionally, that the network device sends the first system information message includes: The network device broadcasts the first system information message. Optionally, if the terminal device is in the RRC idle mode or the RRC inactive mode, the network device broadcasts the first system information message.

Optionally, that the network device sends the first system information message includes: If the terminal device is in the RRC connected mode, the network device sends the first system information message through RRC signaling.

It should be noted that, if the network device does not agree with the system information message of the first type requested by the terminal device, the network device refuses to broadcast the system information message of the first type. Therefore, S230 may not exist.

It should be noted that S210 and S230 are optional steps, and S220 may independently form an embodiment. To be specific, that the terminal device sends the first information and the network device receives the first information may form an embodiment. In this way, a method for sending the first information is provided, where the first information is used to request the first system information message. Optionally, S210 and S220 may form an embodiment. After determining to request the first system information message, the terminal device may send the first information. In addition, if the network device agrees with the request of the terminal device, S230 may be performed; or if the network device does not agree with the request of the terminal device, S230 may not be performed. In other words, if the network device agrees with the request of the terminal device, S220 and S230 may form an embodiment, or S210, S220, and S230 may form an embodiment.

In the foregoing solution, the terminal device may request, from the network device by using the first information, the first system information message required by the terminal device, to avoid signaling overheads caused by blind broadcasting of a system information message by the network device. In addition, when there are N types of system information messages, the N bit information sets in the first information correspond to N types of system information. Because the first bit information for requesting the first system information message belongs to the first bit information set, it is equivalent that the terminal device requests the system information message of the first type corresponding to the first bit information set. Therefore, after receiving the first information, the network device may determine, based on the first bit information set to which the first bit information belongs, that the terminal device requests the first system information message of the first type, and the network device may send the first system information message of the first type. In this way, a case in which the terminal device does not know how to request a system information message and the network device does not know a type of the system information message requested by the terminal device can be avoided, and a method for requesting a system information message is provided. In addition, a case in which the terminal device needs to additionally indicate the type of the requested system information message is avoided, thereby reducing signaling overheads.

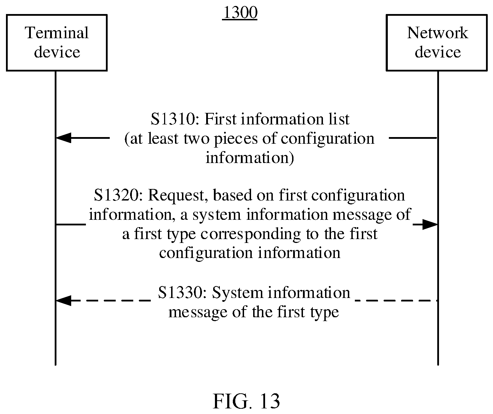

In some embodiments, a network device may configure configuration information of different types of system information messages. The following provides descriptions with reference to a method 1300. As shown in FIG. 13, the method 1300 includes the following steps.

S1310: The network device sends a first information list, and a terminal device receives the first information list, where the first information list includes at least two pieces of configuration information, and the at least two pieces of configuration information corresponds to at least two types of system information messages.

In other words, the network device may configure the configuration information of the at least two types of system information in the first information list.

Optionally, the at least two pieces of configuration information may be at least two random access configurations, and each random access configuration includes a random access resource and a preamble. Random access resources included in different random access configurations may be the same or different, and different random access configurations include different preambles. For example, a random access configuration 1 includes a random access resource 1 and a preamble 1, a random access configuration 2 includes a random access resource 2 and a preamble 2, the preamble 1 and the preamble 2 are different, and the random access resource 1 and the random access resource 2 may be the same or different. If the random access resource 1 and the random access resource 2 are the same, it indicates that the terminal device requests different types of system information messages on the same random access resource by using different preambles.

Optionally, S1310 includes: The network device sends the first information list in a SIB 1. Optionally, that the network device sends the first information list in a SIB1 includes: The network device sends the first information list in scheduling information of a system information message in the SIB1.

S1320: The terminal device requests, based on first configuration information, a system information message of a first type corresponding to the first configuration information, where the at least two pieces of configuration information include the first configuration information, and the at least two types include the first type.

There may be two correspondences between the at least two pieces of configuration information and the at least two types of system information. The following provides descriptions in two cases.

Case 1: The at least two pieces of configuration information belong to at least two configuration information sets, and the at least two configuration information sets correspond to the at least two types of system information messages. In this case, the first information list includes the at least two configuration information sets. An intersection set of the at least two configuration information sets is empty. **In** other words, one piece of configuration information belongs to one configuration information set. Optionally, the at least two configuration information sets are in a one-to-one correspondence with the at least two types of system information messages. To be specific, the at least two pieces of configuration information may belong to N configuration information sets, and a quantity of types of system information messages is also N. **In** this case, the N configuration information sets are in a one-to-one correspondence with the N types of system information messages, that is, one configuration information set corresponds to one type of system information message. **In** other words, the terminal device may request, based on configuration information in a configuration information set, a system information message of a type corresponding to the configuration information set.

For example, the N types include the first type and a second type, the N configuration information sets include a first configuration information set and a second configuration information set, the first configuration information set corresponds to the system information message of the first type, and the second configuration information set corresponds to a system information message of the second type. A quantity of configuration information included in the first configuration information set is the same as a quantity of system information messages of the first type, and a quantity of configuration information included in the second configuration information set is the same as a quantity of system information messages of the second type.

Optionally, a correspondence between the N types of system information messages and the N configuration information sets may be specified in a protocol or pre-configured. This is not limited in embodiments of this application.

Optionally, statuses of the N types of system information messages are a non-broadcast status. In other words, the network device configures, for the terminal device, configuration information of a system information message that is requested by the terminal device and that is not broadcast by the network device.

Optionally, a ranking of a configuration information set in the first information list indicates a system information message of a type corresponding to the first configuration information set. For example, the first configuration information set is a 1^{st} configuration information set in the first information list, and therefore, the first configuration information set corresponds to the system information message of the first type. The second configuration information set is a 2^{nd} configuration information set in the first information list, and therefore, the second configuration information set corresponds to the system information message of the second type. Optionally, a quantity of configuration information included in the first configuration information set is the same as the quantity of system information messages of the first type. In other words, one piece of configuration information may correspond to one system information message. In this way, when requesting a system information message of the first type, the terminal device performs requesting by using configuration information corresponding to the system information message. Similarly, a quantity of configuration information included in the second configuration information set is the same as the quantity of system information messages of the second type. In other words, one piece of configuration information may correspond to one system information message. In this way, when requesting a system information message of the second type, the terminal device performs requesting by using configuration information corresponding to the system information message.

For descriptions of the first type and the second type, refer to the method 200. To avoid repetition, details are not described in this embodiment of this application.

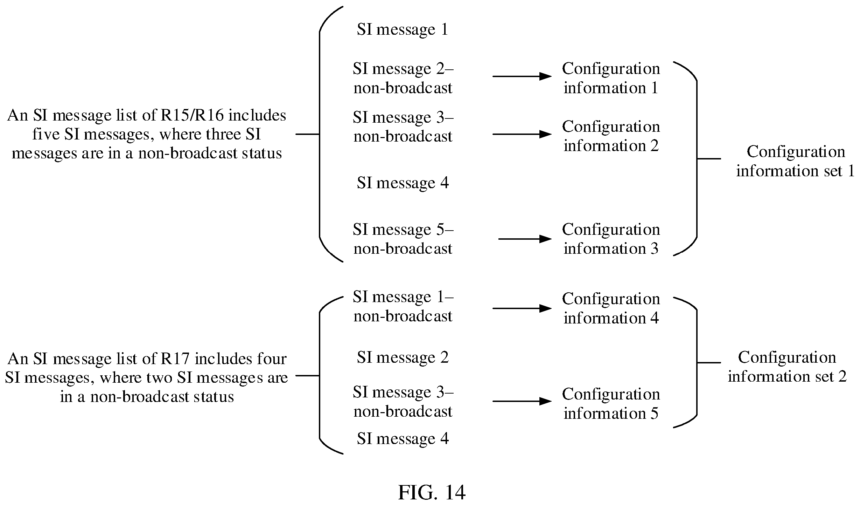

For example, as shown in FIG. 14, a system information message list (SI message list) of R15 and/or R16 includes five SI messages, and broadcast statuses of three SI messages are non-broadcast; and a system information message list (SI message list) of R17 includes four SI messages, and broadcast statuses of two SI messages are non-broadcast. In this case, the first information list may include two configuration information sets. A configuration information set 1 includes three pieces of configuration information: configuration information 1, configuration information 2, and configuration information 3. A configuration information set 2 includes two pieces of configuration information: configuration information 4 and configuration information 5. The configuration information set 1 is the 1^{st} configuration information set in the first information list, and the configuration information set 2 is the 2^{nd} configuration information set in the first information list. Therefore, the three pieces of configuration information in the configuration information set 1, namely, the configuration information 1, the configuration information 2, and the configuration information 3, respectively correspond to the three SI messages of R15 and/or R16 whose broadcast statuses are non-broadcast, namely, an SI message 2, an SI message 3, and an SI message 5. The two pieces of configuration information in the configuration information set 2, namely, the configuration information 4 and the configuration information 5, respectively correspond to the two SI messages of R17 whose broadcast statuses are non-broadcast, namely, an SI message 1 and an SI message 3.

For example, one piece of configuration information in the N configuration information sets includes one random access resource and one preamble, or includes one preamble. In other words, the preamble is a preamble used to request a system information message. For example, when requesting the SI message 3 in FIG. 14, the terminal device first determines a type of the SI message 3, for example, R15 and/or R16, and determines the first configuration information set that is in the first information list and that corresponds to the system information message of R15 and/or the system information message of R16. The first configuration information set is the configuration information set 1, and the configuration information set 1 includes three pieces of configuration information: the configuration information 1, the configuration information 2, and the configuration information 3. Because the terminal device learns that the three non-broadcast SI messages of R15 and/or R16 are the SI message 2, the SI message 3, and the SI message 5, and the SI message 3 is 2^{nd} SI in the non-broadcast SI messages, a 2^{nd} piece of configuration information (the configuration information 2, also referred to as the first configuration information) in the configuration information set 1 is configuration information of the SI message 3. The terminal device requests, by using a random access resource and a preamble that are included in the configuration information 2, the network device to broadcast the SI message 3. The network device determines that the random access resource and the preamble belong to the configuration information 2, and the configuration information 2 belongs to the configuration information set 1. The network device determines that the terminal device requests the 2^{nd} non-broadcast SI message in the SI messages of R15 and/or R16, namely, the SI message 3. The network device may broadcast the SI message 3, and the terminal device may receive the message 3. Alternatively, the terminal device requests, by using the preamble included in the configuration information 2, the network device to broadcast the SI message 3. The network device determines that the preamble belongs to the configuration information 2, and the configuration information 2 belongs to the configuration information set 1. The network device determines that the terminal device requests the 2^{nd} non-broadcast SI message in the SI messages of R15 and/or R16, namely, the SI message 3. The network device may broadcast the SI message 3, and the terminal device may receive the message 3.

Case 2: A quantity of configuration information is N, a quantity of types of system information messages is also N, and the N pieces of configuration information are in a one-to-one correspondence with the N types of system information messages. In other words, configuration information used by the terminal device to request system information messages of a same type is the same. In this way, configurations can be simplified.

For example, the N types include the first type and a second type, the N pieces of configuration information include first configuration information and second configuration information, the first configuration information corresponds to the system information message of the first type, and the second configuration information corresponds to a system information message of the second type.

Optionally, a correspondence between the N types of system information messages and the N pieces of configuration information may be specified in a protocol or pre-configured. This is not limited in embodiments of this application.

Optionally, statuses of the N types of system information messages are a non-broadcast status. In other words, the network device configures, for the terminal device, configuration information of a system information message that is requested by the terminal device and that is not broadcast by the network device.

Optionally, a ranking of one piece of configuration information in the first configuration information list indicates a system information message of a type corresponding to the configuration information. For example, the first configuration information is a 1^{st} piece of configuration information in the first information list, and therefore, the first configuration information corresponds to the system information message of the first type. The second configuration information is a 2^{nd} piece of configuration information in the first information list, and therefore, the second configuration information corresponds to the system information message of the second type. Optionally, the first configuration information corresponds to one or more system information messages of the first type. In this way, when requesting any system information message of the first type, the terminal device performs requesting by using the first configuration information. Similarly, the second configuration information corresponds to a quantity of system information messages of the second type. In other words, one piece of configuration information may correspond to one system information message. In this way, the terminal device requests one or more system information messages of the second type. In this way, when requesting any system information message of the second type, the terminal device performs requesting by using the second configuration information.

For descriptions of the first type and the second type, refer to the method 200. To avoid repetition, details are not described in this embodiment of this application.

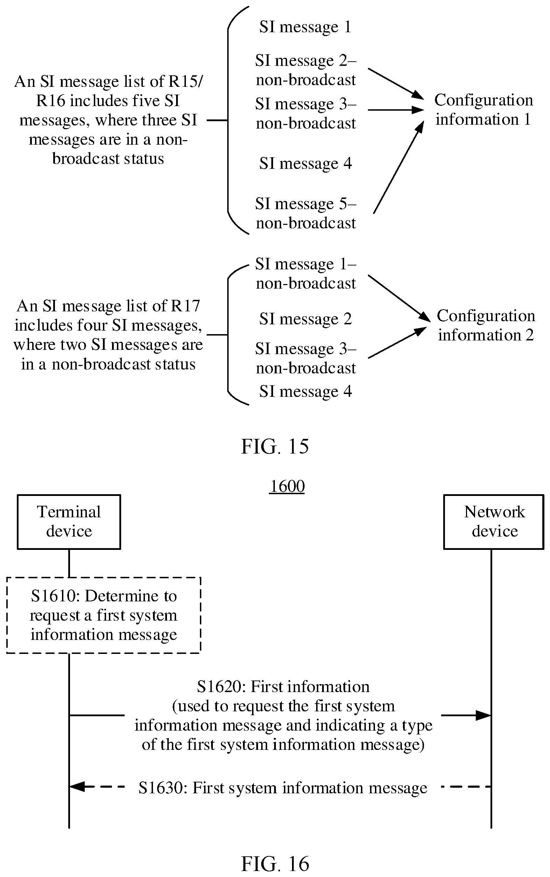

For example, as shown in FIG. 15, a system information message list (SI message list) of R15 and/or R16 includes five SI messages, and broadcast statuses of three SI messages are non-broadcast; and a system information message list (SI message list) of R17 includes four SI messages, and broadcast statuses of two SI messages are non-broadcast. In this case, the first information list may include two pieces of configuration information (configuration information 1 and configuration information 2). A ranking of the configuration information 1 in the first information list is the first, and a ranking of the configuration information 2 in the first information list is the second. The configuration information 1 is the three SI messages (an SI message 2, an SI message 3, and an SI message 5) of R15 and/or R16 whose broadcast statuses are non-broadcast. In other words, the terminal device requests the SI message 2, the SI message 3, and the SI message 5 of R15 and/or R16 by using the configuration information 1. The configuration information 2 is sequentially configuration information of the two SI messages (an SI message 1 and an SI message 3) of R17 whose broadcast statuses are non-broadcast. In other words, the terminal device requests the SI message 1 and the SI message 3 of R17 by using the configuration information 2.

For example, one piece of configuration information in the N pieces of configuration information includes one random access resource and one preamble, or includes one preamble. For example, when requesting the SI message 3 in FIG. 15, the terminal device first determines a type of the SI message 3, for example, R15 and/or R16, and determines the 1^{st} piece of configuration information that is in the first information list and that correspond to the system information message of R15 and/or the system information message of R16. The first configuration information is the configuration information 1, and the configuration information 1 includes a random access resource 1 and a preamble 1, or includes a preamble 1. Therefore, the terminal device requests, by using the random access resource and the preamble that are included in the configuration information 1, the network device to broadcast the SI message 3. The network device determines that the random access resource and the preamble belong to the configuration information 1 (also referred to as the first configuration information), and the configuration information 1 corresponds to the SI message of R15 and/or the SI message of R16. The network device may broadcast an SI message of R15 and/or an SI message of R16 that are/is in the non-broadcast status, and the SI message of R15 and/or the SI message of R16 that are/is in the non-broadcast status include/includes the SI message 3 requested by the terminal device. Alternatively, the terminal device requests, by using the preamble included in the configuration information 2, the network device to broadcast the SI message 3. The network device determines that the preamble belongs to the configuration information 1, and the configuration information 1 corresponds to the SI message of R15 and/or the SI message of R16. The network device may broadcast the SI message of R15 and/or the SI message of R16 that are/is in the non-broadcast status, and the SI message of R15 and/or the SI message of R16 that are/is in the non-broadcast status include/includes the SI message 3 requested by the terminal device.

When requesting the system information message from the network device based on the first configuration information, the terminal device performs S1330.

S1330: The network device sends the system information message of the first type, and the terminal device receives the system information message of the first type.

Optionally, for Case 1 in S1320, in S1330, the network device sends a system information message, in the system information message of the first type, that corresponds to the first configuration information and whose broadcast status is non-broadcast. In other words, in Case 1, the network device broadcasts a system information message that is requested by the terminal device. In this way, fine-grained broadcasting can be performed, and overheads can be reduced.

Optionally, for Case 2 in S1320, in S1330, the network device sends one or more system information messages whose broadcast statuses are non-broadcast in the system information message of the first type. In other words, in Case 2, the terminal device requests the system information message once, and the network device may send one or more system information messages, where the one or more system information messages sent by the network device include the system information message requested by the terminal device. In this way, coarse-grained broadcasting can avoid a case in which the terminal device needs to perform requesting a plurality of times, or one terminal device requests one system information message of a type, and the network device sends a plurality of system information messages of the type, thereby avoiding overheads caused by re-initiating a request by another terminal device when another system information message of the type is required.

It should be noted that, if the network device does not agree with the system information message of the first type requested by the terminal device, the network device refuses to broadcast the system information message of the first type. Therefore, S1330 may not exist.

In some embodiments, when a network device can broadcast a plurality of types of system information messages, a terminal device may indicate, to the network device, a type of a system information message requested by the terminal device. In this way, the network device is prevented from blindly broadcasting the system information message. The following describes, with reference to a method 1600 in FIG. 16, a communication method 1600 provided in an embodiment of this application. As shown in FIG. 16, the method 1600 includes the following steps.

S1610: Determine to request a first system information message.

For S1610, refer to the descriptions of S210.

S1620: The terminal device sends first information, and the network device receives the first information, where the first information is used to request the first system information message and indicates a type of the first system information message, the type of the first system information message is one of N types, and N is an integer greater than 1.

Optionally, M system information message lists (SI message lists) correspond to N types of SI messages, and M is a positive integer greater than or equal to N. One system information message list may include SI messages of a same type. SI messages of a same type may belong to one system information message list or a plurality of system information message lists. If SI messages of a same type may belong to one system information message list, M=N, that is, a quantity of types is the same as a quantity of system information message lists. If SI messages of a same type may belong to a plurality of system information message lists, M is greater than N, that is, there are a plurality of system information message list messages corresponding to SI messages of one type. Optionally, when SI messages of a same type may belong to one system information message list, that is, M=N, the N types are in a one-to-one correspondence with N system information message lists. Optionally, the M system information message lists may be specified in a protocol, pre-configured, or configured by the network device for the terminal device.

Optionally, the first information may include a bit string, and the first information may include one or more bit strings. The following discusses a quantity of bit strings included in the first information in different cases.

Case 1: The first information includes a first bit string, L pieces of bit information included in the bit string correspond to L system information messages, types of the L system information messages are the same, the L system information messages include first system information message, and L is a positive integer.

If a value of first bit information that is in the first bit string and that corresponds to the first system information message is a first value, it indicates that the terminal device requests the first system information message. Optionally, if a value of second bit information that is in the first bit string and that corresponds to a second system information message is a second value, it indicates that the terminal device does not request the second system information message, and the second bit information corresponds to the second system information message. For example, the first value is 1, and the second value is 0. In other words, a system information message corresponding to the value 1 in the first bit string is requested by the terminal device, and a system information message corresponding to the value 0 in the first bit string is not requested by the terminal device.

Similar to that in the method 200, statuses of the L system information messages include a broadcast status and a non-broadcast status, or statuses of the L system information messages include a non-broadcast status. To avoid repetition, details are not described.

In other words, in Case 1, the terminal device may request, in the first bit string included in the first information, a system information message whose broadcast status is non-broadcast. If the statuses of the L system information messages include the broadcast status and the non-broadcast status, L is a total quantity of system information messages that are in the broadcast status and the non-broadcast status in system information messages of this type. If the statuses of the L system information messages include the non-broadcast status, L is a quantity of system information messages that are in the non-broadcast status in system information messages of this type.

Optionally, a length of the first bit string may be specified in a protocol, or may be pre-configured, or may be configured by the network device for the terminal device.

Optionally, the first bit string may further include other bit information in addition to the L pieces of bit information, and the other bit information may be set to 0. In other words, the length of the first bit string may be fixed. If the L pieces of bit information exactly meet the length of the first bit string, 0 is not padded. If the length of the first bit string is greater than L, remaining bits in the first bit string are 0s. For example, if the length of the first bit string is X, and X is greater than L, 0s are padded to X-L pieces of bit information.

Case 2: The first information includes M bit strings, M is a positive integer greater than or equal to 2, Li pieces of bit information included in an i^{th} bit string in the M bit strings correspond to Li system information messages, a value of i is a positive integer from 1 to M, and types of system information messages corresponding to bit information in each of the M bit strings are the same. In other words, a plurality of bit strings correspond to system information messages of a same type, and first bit information included in a bit string in the M bit strings corresponds to the first system information message.

Optionally, if a value of second bit information included in one of the M bit strings is a second value, it indicates that the terminal device does not request a second system information message. For example, a first value is 1, and the second value is 0. In other words, a system information message corresponding to the value 1 in the M bit strings is requested by the terminal device, and a system information message corresponding to the value 0 in the M bit strings is not requested by the terminal device.

Similar to that in the method 200, statuses of the Li system information messages include a broadcast status and a non-broadcast status, or statuses of the Li system information messages include a non-broadcast status. To avoid repetition, details are not described.

In other words, in Case 2, the terminal device may request, in the M bit strings included in the first information, a system information message whose broadcast status is non-broadcast. If the statuses of the Li system information messages include the broadcast status and the non-broadcast status, L1+L2+...+LM is a total quantity of system information messages that are in the broadcast status and the non-broadcast status in system information messages of this type. If the statuses of the Li system information messages include the non-broadcast status, L1+L2+...+LM is a quantity of system information messages that are in the non-broadcast status in system information messages of this type.

Optionally, a ranking of each bit string in the M bit strings in the first information may be fixed, and a correspondence between bit information in each bit string and a system information message is fixed. In this way, the terminal device and the network device may reach a consistent understanding of the first system information message requested by the terminal device.

In other words, in Case 2, when one bit string in the first information is insufficient to carry bit information corresponding to one type of system information message, a plurality of bit strings may be used to carry the bit information corresponding to the one type of system information message. For example, a protocol specifies that a length of a 1^{st} bit string is 5, and a quantity of system information messages of the first type (including system information messages in the broadcast status and the non-broadcast status) is 8. In this case, 5-bit information of the 1^{st} bit string is insufficient to carry 8-bit information corresponding to the eight system information messages. Therefore, a 2^{nd} bit string of the first information may carry the remaining 3-bit information.

For example, M=2, a length of a first bit string is 5, a length of a second bit string is 4, and the first information sent by the terminal device includes the first bit string and the second bit string. A total of seven system information messages of the first type are in the non-broadcast status. If the terminal device needs to request a 2^{nd} system information message in the seven system information messages in the non-broadcast status, the first bit string in the first information is 0 1 0 0 0, and the second bit string is 0 0 0 0, where 0s are padded for last two pieces of bit information in the second bit string. If the terminal device needs to request 2^{nd} and 7^{th} system information messages in the non-broadcast status in the seven system information messages in the non-broadcast status, the first bit string in the first information is 0 1 0 0, and the second bit string is 0 1 0 0, where 0s are padded for last two pieces of bit information in the second bit string.

Optionally, the plurality of bit strings may further include other bit information in addition to the Li pieces of bit information, and the other bit information may be set to 0. In other words, a sum of lengths of the plurality of bit strings may be fixed. If the Li pieces of bit information exactly meet the sum of the lengths of the plurality of bit strings, 0 is not padded. If the sum of the lengths of the plurality of bit strings is greater than the Li pieces of bit information, remaining bit information in the plurality of bit strings is 0. For example, the sum of the lengths of the plurality of bit strings is X, and L1+L2+...+LM=Y. If X is greater than Y, 0s are padded to X-Y pieces of bit information.

Optionally, a length of each of the plurality of bit strings may be specified in a protocol, pre-configured, or configured by the network device for the terminal device. If bit information in a bit information set does not occupy a bit string, 0 is padded to the bit string.

It may be understood that this application is described by using only an example in which the terminal device requests the first system information message. The terminal device may alternatively request a plurality of system information messages by using the first information. For example, bit information corresponding to the plurality of system information messages in the first information is set to 1, indicating that the terminal device requests the system information messages.

The first information indicates the type of the first system information message in two manners.

Manner 1: The first information includes first indication information, and the first indication information indicates the type of the first system information message. To be specific, the first indication information may directly indicate the type of the first system information message. For example, if a value of bit information of the first indication information is a third value, it indicates that the type of the first system information message is the first type; or if a value of bit information of the first indication information is a fourth value, it indicates that the type of the first system information message is the second type. For example, the first indication information occupies 1 bit. If a value of the 1 bit is 1, it indicates that the terminal device requests the system information message of the first type, or if a value of the 1 bit is 0, it indicates that the terminal device requests the system information message of the second type. For example, the first type is R15 and/or R16, and the second type is R17. If the value of the 1 bit is 1, it indicates that the terminal device requests a system information message of R15 and/or a system information message of R16, or if the value of the 1 bit is 0, it indicates that the terminal device requests a system information message of R17.

Optionally, a location of the first indication information in the first information may be specified in a protocol, or may be pre-configured, or may be configured by the network device for the terminal device.

Optionally, the type that is of the system information message and that corresponds to the value of the first indication information may be specified in a protocol, or may be pre-configured, or may be configured by the network device.

Manner 2: When the first information includes second indication information, it indicates that the type of the first system information message requested by the first information is the first type; or when the first information does not include second indication information, it indicates that the type of the first system information message requested by the first information is the second type, and the N types include the first type and the second type. For example, the first type is R15 and/or R16, and the second type is R17. For another example, the first type is R17, and the second type is R15 and/or R16.

For descriptions of the first type and the second type, refer to the method 200. To avoid repetition, details are not described in this embodiment of this application.

Optionally, a location of the second indication information in the first information may be specified in a protocol, pre-configured, or configured by the network device.

Optionally, whether the first information includes the type corresponding to the second indication information may be specified in a protocol, pre-configured, or configured by the network device.

Optionally, S1620 includes: The terminal device may send the first information based on a message similar to a message 3 or a message A in a random access process. Optionally, the terminal device may send the first information based on the message 3 in S1130 in FIG. 11, or send the first information based on the message A in FIG. 12. To avoid repetition, this is not limited in embodiments of this application. If the terminal device is in an RRC idle mode or an RRC inactive mode, the terminal device may send the first information by using the message 3 in S1130 in FIG. 11, or send the first information by using the message A in FIG. 12. If the terminal device is in an RRC connected mode, the terminal device may send the first information through RRC dedicated signaling.

Optionally, the terminal device may send the first information based on the configuration information included in the first information list in the method 1300. In other words, when the network device configures the first information list, S1630 includes: The terminal device may send the first information based on the first configuration information in the first information list.

Optionally, a quantity of configuration information included in the first information list in the method 1300 is P, the P pieces of configuration information correspond to the N types of system information messages, and for a correspondence between the P pieces of configuration information and the N types of system information messages, refer to Case 1 and Case 2 in S 1320. Optionally, P may be greater than N. In other words, at least two pieces of configuration information may correspond to one type of system information message. Optionally, when P is greater than N, a plurality of pieces of configuration information form N configuration sets. For a correspondence between the N configuration information sets and the N types of system information messages, refer to Case 1 in S1320. Optionally, P may be less than N. In other words, one piece of configuration information corresponds to at least two types of system information messages. Optionally, P may be equal to N, and the N pieces of configuration information correspond to the N types of system information messages. In this case, for a correspondence between the N pieces of configuration information and the N types of system information messages, refer to Case 2 in S1320.

Optionally, the terminal device may send the first information based on first configuration information, where the first configuration information corresponds to the system information message of the first type, the first system information message belongs to the system information message of the first type, the P pieces of configuration information include the first configuration information, and the N types include the first type. In other words, when the terminal device needs to request the first system information message of the first type, the terminal device first determines the configuration information corresponding to the system information message of the first type. If the system information message of the first type corresponds to the first configuration information set, that is, in Case 1 in S1320, the terminal device needs to determine, from the first configuration information set, the first configuration information corresponding to the first system information message, and then send the first information based on a configuration of the first configuration information. For example, the terminal device needs to request the SI message 2 of R15 and/or R16, and the terminal device needs to determine the configuration information set 1 corresponding to R15 and/or R16, where the SI message 2 is a 2^{nd} SI message of R15 and/or R16 in the non-broadcast status. Therefore, the terminal device determines that the configuration information 2 in the configuration information set 1 is configuration information of the SI message 2, and sends the first information based on the configuration information 2. If the system information message of the first type corresponds to one piece of first configuration information, that is, in Case 2 in S1320, the terminal device sends the first information based on the first configuration information. For example, when requesting the SI message 3 in FIG. 15, the terminal device first determines the type of the SI message 3, for example, R15 and/or R16, and determines a 1^{st} piece of configuration information in the first information list corresponding to the system information message of R15 and/or the system information message of R16, where the 1^{st} piece of configuration information is the configuration information 1. Therefore, the terminal device sends the first information by using the configuration information 1.

S1630: The network device sends the first system information message, and the terminal device receives the first system information message.

Optionally, that the network device sends the first system information message includes: The network device broadcasts the first system information message. Optionally, if the terminal device is in the RRC idle mode or the RRC inactive mode, the network device broadcasts the first system information message.

Optionally, that the network device sends the first system information message includes: If the terminal device is in the RRC connected mode, the network device sends the first system information message through RRC signaling.

It should be noted that, if the network device does not agree with the system information message of the first type requested by the terminal device, the network device refuses to broadcast the system information message of the first type. Therefore, S1630 may not exist.

It should be noted that S1610 and S1630 are optional steps, and S1620 may independently form an embodiment. To be specific, that the terminal device sends the first information and the network device receives the first information may form an embodiment. In this way, a method for sending the first information is provided, where the first information is used to request the first system information message. Optionally, S1610 and S1620 may form an embodiment. After determining to request the first system information message, the terminal device may send the first information. In addition, if the network device agrees with the request of the terminal device, S1630 may be performed; or if the network device does not agree with the request of the terminal device, S1630 may not be performed. In other words, if the network device agrees with the request of the terminal device, S1620 and S1630 may form an embodiment, or S1610, S1620, and S1630 may form an embodiment.

In the foregoing solution, the terminal device may request, from the network device by using the first information, the first system information message required by the terminal device, to avoid signaling overheads caused by blind broadcasting of a system information message by the network device. **In** addition, when there are N types of system information messages, and the first information may indicate, to the network device, the type of the first system information message requested by the terminal device, after receiving the first information, the network device may determine, based on the first information, the type of the system information message requested by the terminal device and the specific requested system information message of the type, and the network device may send the first system information message requested by the terminal device. **In** this way, a case in which the terminal device does not know how to request a system information message and the network device does not know a type of the system information message requested by the terminal device can be avoided, and a method for requesting a system information message is provided.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

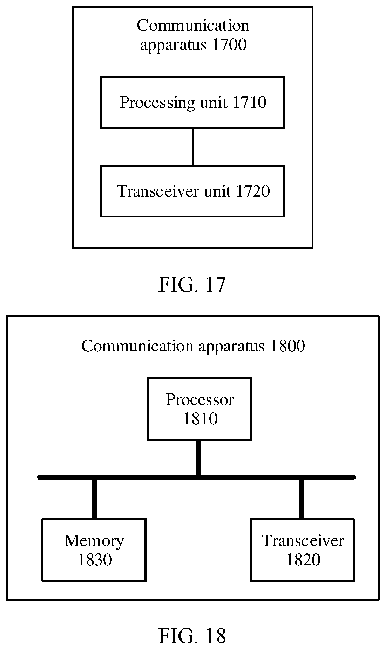

FIG. 17 shows a communication apparatus 1700 according to an embodiment of this application. The communication apparatus 1700 includes a processing unit 1710 and a transceiver unit 1720. The processing unit 1710 and the transceiver unit 1720 communicate with each other through an internal connection path, and the processing unit 1710 is configured to execute instructions, to control the transceiver unit 1720 to send a signal and/or receive a signal.

In a possible implementation, the communication apparatus 1700 may correspond to the terminal device in the method 200, for example, may be the terminal device or a chip configured in the terminal device. The communication apparatus 1700 is configured to perform steps or procedures corresponding to the terminal device in the method 200.

In a possible implementation, the communication apparatus 1700 may correspond to the network device in the method 200, for example, may be the terminal device or a chip configured in the network device. The communication apparatus 1700 is configured to perform steps or procedures corresponding to the network device in the method 200.

In a possible implementation, the communication apparatus 1700 may correspond to the terminal device in the method 1300, for example, may be the terminal device or a chip configured in the terminal device. The communication apparatus 1700 is configured to perform steps or procedures corresponding to the terminal device in the method 1300.

In a possible implementation, the communication apparatus 1700 may correspond to the network device in the method 1300, for example, may be the terminal device or a chip configured in the network device. The communication apparatus 1700 is configured to perform steps or procedures corresponding to the network device in the method 1300.

In a possible implementation, the communication apparatus 1700 may correspond to the terminal device in the method 1600, for example, may be the terminal device or a chip configured in the terminal device. The communication apparatus 1700 is configured to perform steps or procedures corresponding to the terminal device in the method 1600.

In a possible implementation, the communication apparatus 1700 may correspond to the network device in the method 1600, for example, may be the terminal device or a chip configured in the network device. The communication apparatus 1700 is configured to perform steps or procedures corresponding to the network device in the method 1600.

It should be understood that the communication apparatus 1700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 1700 may be specifically the terminal device in the method 200, the method 1300, or the method 1600 in the foregoing embodiments, and may be configured to perform the procedures and/or steps corresponding to the terminal device in the method 200, the method 1300, or the method 1600 in the foregoing method embodiments. Alternatively, the communication apparatus 1700 may be specifically the network device in the method 200, the method 1300, or the method 1600 in the foregoing embodiments, to perform the procedures and/or steps corresponding to the network device in the method 200, the method 1300, or the method 1600 in the foregoing method embodiments. To avoid repetition, details are not described herein again.

The communication apparatus 1700 in each of the foregoing solutions has a function of implementing a corresponding step performed by the terminal device in the method 200, the method 1300, or the method 1600, or the communication apparatus 1700 in each of the foregoing solutions has a function of implementing a corresponding step performed by the network device in the method 200, the method 1300, or the method 1600. The function may be implemented by hardware, or may be implemented by hardware executing corresponding software. The hardware or software includes one or more modules corresponding to the function. For example, a communication unit may be replaced with a transceiver (for example, a sending unit in the communication unit may be replaced with a transmitter, and a receiving unit in the communication unit may be replaced with a receiver), and another unit like a processing unit may be replaced with a processor, to separately perform sending and receiving operations and a related processing operation in the method embodiments.

In addition, the communication unit may alternatively be a transceiver circuit (for example, may include a receiving circuit and a sending circuit), and the processing unit may be a processing circuit. In this embodiment of this application, the communication apparatus in FIG. 17 may be the terminal device or the network device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 18 shows a communication apparatus 1800 according to an embodiment of this application. The communication apparatus 1800 includes a processor 1810 and a transceiver 1820. The processor 1810 and the transceiver 1820 communicate with each other through an internal connection path, and the processor 1810 is configured to execute instructions, to control the transceiver 1820 to send a signal and/or receive a signal.

Optionally, the communication apparatus 1800 may further include a memory 1830. The memory 1830 communicates with the processor 1810 and the transceiver 1820 through internal connection paths. The memory 1830 is configured to store instructions, and the processor 1810 may execute the instructions stored in the memory 1830. In a possible implementation, the communication apparatus 1800 is configured to implement procedures and operations corresponding to the terminal device in the method 200. In a possible implementation, the communication apparatus 1800 is configured to implement procedures and operations corresponding to the network device in the method 200. In a possible implementation, the communication apparatus 1800 is configured to implement procedures and operations corresponding to the terminal device in the method 1300. In a possible implementation, the communication apparatus 1800 is configured to implement procedures and operations corresponding to the network device in the method 1300. In a possible implementation, the communication apparatus 1800 is configured to implement procedures and operations corresponding to the terminal device in the method 1600. In a possible implementation, the communication apparatus 1800 is configured to implement procedures and operations corresponding to the network device in the method 1600.

It should be understood that the communication apparatus 1800 may be specifically the terminal device in the method 200, the terminal device in the method 1300, the terminal device in the method 1600, the network device in the method 200, the network device in the method 1300, or the network device in the method 1600, or may be a chip or a chip system. Correspondingly, the transceiver 1820 may be a transceiver circuit of the chip. This is not limited herein. Specifically, the communication apparatus 1800 may be configured to perform the operations and/or procedures corresponding to the terminal device or the network device in the foregoing method embodiments. Optionally, the memory 1830 may include a read-only memory and a random access memory, and provide instructions and data for the processor. A part of the memory may further include a non-volatile random access memory. For example, the memory may further store information about a device type. The processor 1810 may be configured to execute the instructions stored in the memory. When the processor 1810 executes the instructions stored in the memory, the processor 1810 is configured to perform the operations and/or procedures corresponding to the terminal device in the method 200, the terminal device in the method 1300, the terminal device in the method 1600, the network device in the method 200, the network device in the method 1300, or the network device in the method 1600.

In an implementation process, the operations in the foregoing methods may be completed by using a hardware integrated logical circuit in the processor or instructions in a form of software. The operations in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the operations in the foregoing methods in combination with the hardware of the processor. To avoid repetition, details are not described herein again.

It should be noted that, the processor in embodiments of this application may be an integrated circuit chip, and has a signal processing capability. In an implementation process, the operations in the foregoing method embodiments may be completed by using a hardware integrated logical circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the operations, and logical block diagrams that are disclosed in embodiments of this application. The general-purpose processor may be a microprocessor, or the processor may be any conventional processor or the like. The operations in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the operations in the foregoing methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that memories in the system and the methods described in this specification include but are not limited to the memories and memories of any other suitable types.

According to the methods provided in embodiments of this application, this application further provides a computer program product. The computer program product includes computer program code. When the computer program code is run on a computer, the computer is enabled to perform the operations or procedures performed by the terminal device in the method 200, the terminal device in the method 1300, the terminal device in the method 1600, the network device in the method 200, the network device in the method 1300, or the network device in the method 1600.

According to the methods provided in embodiments of this application, this application further provides a computer-readable storage medium. The computer-readable storage medium stores program code. When the program code is run on a computer, the computer is enabled to perform the operations or procedures performed by the terminal device in the method 200, the terminal device in the method 1300, the terminal device in the method 1600, the network device in the method 200, the network device in the method 1300, or the network device in the method 1600.

According to the methods provided in embodiments of this application, this application further provides a communication system, including one or more terminal devices and one or more network devices in the method 200, or including at least two of one or more terminal devices and one or more network devices in the method 1300, or including one or more terminal devices and one or more network devices in the method 1600.

The foregoing apparatus embodiments completely correspond to the foregoing method embodiments. A corresponding module or unit performs a corresponding operation. For example, a communication unit (a transceiver) performs a receiving operation or a sending operation in the method embodiments, and a processing unit (a processor) may perform an operation other than the sending operation or the receiving operation. A function of a specific unit may be based on a corresponding method embodiment. There may be one or more processors.

In embodiments of this application, the terms and English abbreviations are all examples given for ease of description, and should not constitute any limitation on this application. This application does not exclude a possibility of defining another term that can implement a same or similar function in an existing or a future protocol.

It should be understood that "and/or" in this specification describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects.

A person of ordinary skill in the art may be aware that the illustrative logical blocks (illustrative logical blocks) and the operations described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the operations of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the communication method is applicable to a terminal device, and comprises:
determining to request a first system information message; and
sending first information, wherein first bit information in the first information is used to request the first system information message, N bit information sets in the first information correspond to N types of system information messages, the first bit information belongs to a first bit information set comprised in the N bit information sets, the first system information message belongs to a system information message of a first type corresponding to the first bit information set, the N types comprise the first type, and N is an integer greater than 1.

2. The communication method according to claim 1, wherein a first bit string in the first information comprises the N bit information sets, and N locations of the N bit information sets in the first bit string correspond to the N types.

3. The communication method according to claim 2, wherein the N bit information sets further comprise a second bit information set, the first bit information set is before the second bit information set in the N locations or the first bit information set is after the second bit information set in the N locations, the second bit information set corresponds to a system information message of a second type, and the N types comprise the second type.

4. The communication method according to claim 3, wherein a status of the system information message of the first type comprises a broadcast status and a non-broadcast status, or a status of the system information message of the first type comprises a non-broadcast status; and a status of the system information message of the second type comprises a broadcast status and a non-broadcast status, or a status of the system information message of the second type comprises a non-broadcast status.

5. The communication method according to claim 1, wherein the first information comprises a plurality of bit strings; and
the first information comprises a third bit information set, bit information comprised in the third bit information set belongs to at least two of the plurality of bit strings, the third bit information set corresponds to a system information message of a third type, and the N types comprise the third type; and/or
the first information comprises a fourth bit information set, bit information comprised in the fourth bit information set belongs to a second bit string in the plurality of bit strings, the fourth bit information set corresponds to a system information message of a fourth type, and the N types comprise the fourth type.

6. The communication method according to any one of claims 1 to 5, wherein the N bit information sets in the first information are in a one-to-one correspondence with the N types of system information messages, and the N types of system information messages are in a one-to-one correspondence with N system information message lists.

7. The communication method according to any one of claims 1 to 6, wherein the N types further comprise the second type; and
the system information message of the first type is a system information message of a first feature, and the system information message of the second type is a system information message of a second feature;
the system information message of the first type is a system information message of a first release, and the system information message of the second type is a system information message of a second release; or
the system information message of the first type is a system information message of a first release, and the system information message of the second type is a system information message of a third feature of a second release.

8. The communication method according to claim 7, wherein the first release is a release 15 and/or a release 16, and the second release is a release 17.

9. The communication method according to any one of claims 1 to 8, wherein the first information is carried in a radio resource control system information request message.

10. The communication method according to any one of claims 1 to 9, wherein the method further comprises:
receiving the first system information message.

11. A communication method, wherein the communication method is applicable to a network device, and comprises:
receiving first information, wherein first bit information in the first information is used to request a first system information message, N bit information sets in the first information correspond to N types of system information messages, the first bit information belongs to a first bit information set comprised in the N bit information sets, the first system information message belongs to a system information message of a first type corresponding to the first bit information set, the N types comprise the first type, and N is an integer greater than 1; and
sending the first system information message.

12. The communication method according to claim 11, wherein a first bit string in the first information comprises the N bit information sets, and N locations of the N bit information sets in the first bit string correspond to the N types.

13. The communication method according to claim 12, wherein the N bit information sets further comprise a second bit information set, the first bit information set is before the second bit information set in the N locations or the first bit information set is after the second bit information set in the N locations, the second bit information set corresponds to a system information message of a second type, and the N types comprise the second type.

14. The communication method according to claim 13, wherein a status of the system information message of the first type comprises a broadcast status and a non-broadcast status, or a status of the system information message of the first type comprises a non-broadcast status; and a status of the system information message of the second type comprises a broadcast status and a non-broadcast status, or a status of the system information message of the second type comprises a non-broadcast status.

15. The communication method according to claim 11, wherein the first information comprises a plurality of bit strings; and
the first information comprises a third bit information set, bit information comprised in the third bit information set belongs to at least two of the plurality of bit strings, the third bit information set corresponds to a system information message of a third type, and the N types comprise the third type; and/or
the first information comprises a fourth bit information set, bit information comprised in the fourth bit information set belongs to a second bit string in the plurality of bit strings, the fourth bit information set corresponds to a system information message of a fourth type, and the N types comprise the fourth type.

16. The communication method according to any one of claims 11 to 15, wherein the N bit information sets in the first information are in a one-to-one correspondence with the N types of system information messages, and the N types of system information messages are in a one-to-one correspondence with N system information message lists.

17. The communication method according to any one of claims 11 to 16, wherein the N types further comprise the second type; and
the system information message of the first type is a system information message of a first feature, and the system information message of the second type is a system information message of a second feature;
the system information message of the first type is a system information message of a first release, and the system information message of the second type is a system information message of a second release; or
the system information message of the first type is a system information message of a first release, and the system information message of the second type is a system information message of a third feature of a second release.

18. The communication method according to claim 17, wherein the first release is a release 15 and/or a release 16, and the second release is a release 17.

19. The communication method according to any one of claims 11 to 18, wherein the first information is carried in a radio resource control system information request message.

20. A communication method, wherein the communication method is applicable to a terminal device, and the communication method comprises:
receiving a first information list, wherein the first information list comprises at least two pieces of configuration information, and the at least two pieces of configuration information correspond to at least two types of system information messages; and
requesting, based on first configuration information, a system information message of a first type corresponding to the first configuration information, wherein the at least two pieces of configuration information comprise the first configuration information, and the at least two types comprise the first type.

21. The communication method according to claim 20, wherein the at least two pieces of configuration information belong to at least two configuration information sets, and the at least two configuration information sets correspond to the at least two types of system information messages.

22. The communication method according to claim 20 or 21, wherein the at least two types further comprise a second type; and
the system information message of the first type is a system information message of a first feature, and a system information message of the second type is a system information message of a second feature;
the system information message of the first type is a system information message of a first release, and a system information message of the second type is a system information message of a second release; or
the system information message of the first type is a system information message of a first release, and a system information message of the second type is a system information message of a third feature of a second release.

23. The communication method according to claim 22, wherein the first release is a release 15 and/or a release 16, and the second release is a release 17.

24. The communication method according to claim 23, wherein in the first information list, configuration information corresponding to a system information message of the release 15 and/or a system information message of the release 16 is before configuration information corresponding to a system information message of the release 17.

25. The communication method according to any one of claims 20 to 24, wherein statuses of the at least two types of system information messages comprise a non-broadcast status.

26. A communication method, wherein the communication method is applicable to a network device, and the communication method comprises:
sending a first information list, wherein the first information list comprises at least two pieces of configuration information, and the at least two pieces of configuration information correspond to at least two types of system information messages; and
when a terminal device requests a system information message from the network device based on first configuration information, sending a system information message of a first type corresponding to the first configuration information, wherein the at least two pieces of configuration information comprise the first configuration information, and the at least two types comprise the first type.

27. The communication method according to claim 26, wherein the at least two pieces of configuration information belong to at least two configuration information sets, and the at least two configuration information sets correspond to the at least two types of system information messages.

28. The communication method according to claim 26 or 27, wherein the at least two types further comprise a second type; and
the system information message of the first type is a system information message of a first feature, and a system information message of the second type is a system information message of a second feature;
the system information message of the first type is a system information message of a first release, and a system information message of the second type is a system information message of a second release; or
the system information message of the first type is a system information message of a first release, and a system information message of the second type is a system information message of a third feature of a second release.

29. The communication method according to claim 28, wherein the first release is a release 15 and/or a release 16, and the second release is a release 17.

30. The communication method according to claim 29, wherein in the first information list, configuration information corresponding to a system information message of the release 15 and/or a system information message of the release 16 is before configuration information corresponding to a system information message of the release 17.

31. The communication method according to any one of claims 26 to 30, wherein statuses of the at least two types of system information messages comprise a non-broadcast status.

32. A communication apparatus, comprising a processor, wherein the processor is coupled to a memory, and the processor is configured to execute a computer program or instructions stored in the memory, so that the communication apparatus implements the method according to any one of claims 1 to 31.

33. A computer-readable storage medium, wherein the computer-readable storage medium stores computer instructions, and when the computer instructions are run on a communication apparatus, the communication apparatus is enabled to perform the method according to any one of claims 1 to 31.
